# EUROPÄISCHE PATENTSCHRIFT

(11) **EP 3 422 837 B1**
(45) Veröffentlichungstag und Bekanntmachung des Hinweises auf die Patenterteilung: **15.12.2021**
(21) Anmeldenummer: 17707249.3
(22) Anmeldetag: 23.02.2017
(51) Int. Cl.: A01B 45/02, A01B 69/04

(54) **BODENBEHANDLUNGSVORRICHTUNG**
GROUND TREATMENT DEVICE
DISPOSITIF DE TRAITEMENT DE SOL

(30) Priorität: 03.03.2016 DE 102016103853
(43) Veröffentlichungstag der Anmeldung: 09.01.2019
(73) Patentinhaber: Novokraft AG, 4125 Riehen (CH)
(72) Erfinder: HARDMAN, Eric, 4125 Riehen (CH)
(74) Vertreter: Hoeger, Stellrecht & Partner Patentanwälte mbB
(86) Internationale Anmeldenummer: PCT/EP2017/054187
(87) Internationale Veröffentlichungsnummer: WO 2017/148792

(56) Entgegenhaltungen:
- EP-A1- 0 195 103
- WO-A1-2007/141415
- WO-A1-2015/142166
- CA-A1- 2 808 763
- DE-A1- 2 346 927
- DE-A1- 4 017 115
- DE-A1- 10 152 726
- US-A- 5 036 210
- US-A1- 2003 231 020

## Beschreibung

Die Erfindung betrifft eine Bodenbehandlungsvorrichtung für Böden mit Rasenbewuchs, insbesondere Böden von Sport- oder Freizeitanlagen, in denen Leitungen und speziell Rohrleitungen einer Rasenklimatisierungseinrichtung verlegt sind, wobei die Bodenbehandlungsvorrichtung eine Mehrzahl von an einer Trageinrichtung über eine Hubeinrichtung beweglich gehaltenen, in den Boden einführbaren und aus diesem herausziehbaren Bodenbehandlungselementen umfasst.

Die Erfindung betrifft ferner ein Bodenbehandlungssystem mit einer Bodenbehandl ungsvorrichtung.

Außerdem betrifft die vorliegende Offenbarung eine Leitung, insbesondere eine Rohrleitung oder eine elektrische Leitung, speziell eine Rohrleitung einer Rasenklimatisierungseinrichtung für eine Sport- oder Freizeitanlage. Die besagte Leitung ist nicht Teil der Erfindung.

Eine Bodenbehandlungsvorrichtung der eingangs genannten Art kommt zur Pflege des Bodens zum Einsatz. Dabei können die beispielsweise stift- oder dornartigen Bodenbehandlungselemente in den Boden eingeführt und wieder aus diesem herausgezogen werden, um den Boden zu aerifizieren. Luft und Wasser können über die Einstiche in den Boden verbessert eindringen, wodurch das Wachstum des Rasens durch bessere Belüftung und Bewässerung gefördert wird. Es sind auch Bodenbehandlungsvorrichtungen der eingangs genannten Art bekannt, bei denen die Bodenbehandlungselemente als nadelförmige Injektionselemente zum Injizieren eines Fluids in den Boden ausgestaltet sind. Eine derartige Bodenbehandlungsvorrichtung ist zum Beispiel in der nicht-vorveröffentlichten Patentanmeldung DE 10 2015 115 991 derselben Anmelderin beschrieben. Durch die Wirkung des Fluids, insbesondere ein Druckgas oder Druckgasgemisch, kann zusätzlich zu den vorstehend genannten Wirkungen eine Lockerung des Bodens erfolgen. Luft und Wasser können dadurch noch besser in den Boden eindringen, und es wird eine bessere Drainagewirkung erzielt. Zusätzlich kann sich das Wurzelwerk des Rasenbewuchses besser im Erdreich ausbreiten, so dass der Rasenbewuchs im Ergebnis noch besser gefördert werden kann.

Alternativ sind klingenförmige Bodenbehandlungselemente denkbar, um Einschnitte im Boden zu erzeugen.

Eine Förderung des Rasenbewuchses durch verbesserte Belüftung, Bewässerung und Lockerung des Bodens ist insbesondere dann von Vorteil, wenn im Boden Rohrleitungen einer Rasenklimatisierungseinrichtung verlegt sind. Eine derartige Rasenklimatisierungseinrichtung ist beispielsweise für eine Sport- oder Freizeitanlage vorgesehen und bei einer vorteilhaften Ausgestaltung oberflächennah verlegt. Die oberflächennahe Verlegung erlaubt eine hohe Energieeffizienz der Rasenklimatisierungseinrichtung, die als Rasenheizeinrichtung und/oder als Rasenkühleinrichtung ausgebildet sein kann. Aufgrund der Temperaturschwankungen (man denke an die Erwärmung des Bodens und des Wurzelwerks bei einer Rasenheizung) besteht ein besonderer Bedarf an einer den Rasenbewuchs fördernden Bodenpflege.

Die Patentanmeldung DE 10 2014 105 577 A1 und die nicht-vorveröffentlichte Patentanmeldung DE 10 2015 110 547 derselben Anmelderin beschreiben Vorrichtungen zum oberflächennahen Verlegen von Rohren für Rasenklimatisierungseinrichtungen der beschriebenen Art.

Die vorliegende Erfindung wird nachfolgend insbesondere am Beispiel einer mit Rasenbewuchs versehenen Sport- oder Freizeitanlage beschrieben, die speziell mit einer Rasenklimatisierungseinrichtung ausgestattet ist, die oberflächennah im Boden verlegte Rohrleitungen aufweist. Jedoch ist die vorliegende Erfindung nicht nur auf dieses Anwendungsgebiet beschränkt, auch wenn sie sich hierfür in besonderem Maße eignet. Ein Rasenbewuchs aufweisender Boden einer Sport- oder Freizeitanlage ist zum Beispiel ein Fußballfeld, welches das Spielfeld und dessen Randbereiche (Seiten- und Torausbereiche, Coaching-Zonen ...) umfassen kann. Andere Beispiele sind ein Footballfeld, ein Rugbyfeld, ein Baseballfeld, ein Golfplatz, der sowohl das Green als auch das Fairway umfassen kann, oder ein Tennisplatz mit Rasenbewuchs. Beispiele für Freizeitanlagen sind Grünanlagen im öffentlichen Bereich, etwa Parkanlagen.

Eine im Boden verlegte Rohrleitung kann auch eine Flüssigkeitsleitung einer Beregnungsanlage für die Rasenfläche sein. Beregnungsanlagen sind beispielsweise in Sportanlagen wie Fußballfeldern oder Freizeitanlagen wie Grünanlagen im öffentlichen Bereich verlegt.

Bei der im Boden verlegten Leitung kann es sich andererseits auch um eine elektrische Leitung handeln.

Die in der eingangs genannten Patentanmeldung DE 10 2015 115 991 beschriebene Bodenbehandlungsvorrichtung bewährt sich in der Praxis. Unter Einsatz der Bodenbehandlungsvorrichtung können auch größere Bodenflächen systematisch und zeitsparend gepflegt werden. Dennoch wäre es wünschenswert, eine Bodenbehandlungsvorrichtung bereitzustellen, mit der eine noch einfachere Behandlung des Bodens möglich ist.

Die WO 2007/141415 A1 beschreibt ein Detektionssystem zum Identifizieren und Verfolgen von Rohren oder anderen Gegenständen, die im Boden verlegt sind. Das Detektionssystem umfasst eine Codiereinrichtung, die an den Rohren angebracht oder in diese integriert ist, in Form einer Folge von dünnen Codierelementen, die jeweils eine Oberfläche bestimmter Größe aufweisen und voneinander getrennt sind, wobei deren Anordnung einen Code definiert. Das System umfasst ferner mindestens eine Sendespule, mindestens eine Empfangsspule und eine Signalverarbeitungseinrichtung zum Verarbeiten der Signale der jeweiligen Spulen. Zumindest einige der Codierelemente sind aus einem magnetischen Material gefertigt, und die Detektionseinrichtung ist ausgestaltet, den Betriebspunkt der Codierelemente zu sättigen oder zu verändern, wodurch diese ein frequenzreiches Signal mit einer Basisfrequenz und höheren Harmonischen emittieren.

Die CA 2 808 763 A1 beschreibt eine Vorrichtung zur Bodenbelüftung. Die Vorrichtung ist handgeführt und umfasst drei in den Boden einführbare Injektionslanzen für Druckluft.

Unterschiedliche Ausführungsformen von Rasenmähern sind in der DE 23 46 927 A und der DE 101 52 726 A1 beschrieben. Die WO 2015/142166 A1 beschreibt ein System und ein Verfahren zum Navigieren eines landwirtschaftlichen Fahrzeugs auf einer Landwirtschaftsfläche, wobei zumindest ein Teil der Fläche in Echtzeit von oben mittels eines Fluggerätes überwacht wird.

In der US 5,036,210 ist ein magnetisch detektierbares Kunststoffrohr beschrieben. Eine mittels RFID-Technologie arbeitende Detektionseinrichtung für mit Detektionselementen versehene Objekte, insbesondere im Boden verlegte Rohre, ist in der US 2003/0231020 A1 beschrieben.

Aufgabe der vorliegenden Erfindung ist es, eine Bodenbehandlungsvorrichtung der eingangs genannten Art und ein Bodenbehandlungssystem bereitzustellen, die bzw. das eine einfachere Behandlung des Bodens ermöglicht. Außerdem ist es Aufgabe der vorliegenden Erfindung, eine Leitung (Rohrleitung und/oder elektrische Leitung) bereitzustellen, die in einem zu behandelnden Boden verlegbar ist und mit der Bodenbehandlungsvorrichtung zusammenwirkt.

Diese Aufgabe wird erfindungsgemäß durch eine Bodenbehandlungsvorrichtung mit den Merkmalen von Anspruch 1 gelöst.

Für die nachfolgenden Erläuterungen wird angenommen, dass Positions- und Orientierungsangaben wie beispielsweise "oben", "unten", "horizontal", "vertikal" oder dergleichen als auf einen bestimmungsgemäßen Gebrauch der Bodenbehandlungsvorrichtung bezogen aufzufassen sind. Dabei wird mit der Bodenbehandlungsvorrichtung insbesondere ein Boden bearbeitet, der nicht einschränkend eine als horizontal angesehene Bodenfläche aufweist. Im bestimmungsgemäßen Gebrauch nimmt die Bodenbehandlungsvorrichtung insbesondere einen Betriebszustand ein, in dem sie vorzugsweise auf der Oberfläche des Bodens positioniert ist. Die Bodenbehandlungsvorrichtung ist günstigerweise längs einer Bearbeitungsrichtung über die Bodenfläche und relativ zu dieser bewegbar.

Bei der erfindungsgemäßen Bodenbehandlungsvorrichtung ist vorgesehen, dass deren Relativposition zu den im Boden verlegten Leitungen mittels der Detektionseinrichtung erfassbar ist. In zumindest einer und vorzugsweise drei Raumrichtungen lässt sich dadurch ermitteln, wie die Bodenbehandlungsvorrichtung relativ zu den Leitungen positioniert ist, wobei bei einer besonders vorteilhaften Ausführungsform vorzugsweise zumindest die Verlegetiefe der Leitungen im Boden ermittelt werden kann. Die selbstfahrende Bodenbehandlungsvorrichtung kann relativ zu den Leitungen autonom verfahren werden. An einer, durch die ermittelte Lage der Leitungen bestimmbaren Position, können die Bodenbehandlungselemente in den Boden eingeführt werden. Dies erlaubt es beispielsweise sicherzustellen, dass die Bodenbehandlungselemente nur so tief oder nur an solchen Positionen eingeführt werden, dass eine Beschädigung der Leitungen vermieden werden kann. Alternativ oder ergänzend kann vorgesehen sein, dass die Bodenbehandlungselemente gezielt zwischen den Leitungen in den Boden eingeführt werden und günstigerweise so tief, dass auch eine Tiefenaerifizierung des Bodens seitlich neben oder sogar unterhalb der Leitungen ausgeführt wird.

Da die Bodenbehandlungsvorrichtung selbstfahrend ausgestaltet ist, kann ein Arbeitseinsatz durch eine Bedienperson weitgehend unterbleiben, auch größere Bodenflächen lassen sich dadurch zeit- und kostensparend außerhalb Arbeitssperrzeiten und zu jeder Tages- und Nachtzeit behandeln. Angesichts der Detektion der Position der Lage der Leitungen werden auch zeitraubende und möglicherweise fehlerbehaftete Führungen der Bodenbehandlungsvorrichtung durch eine Bedienperson vermieden, was über die zielgerichtetere Behandlung des Bodens hinaus eine weitere Zeitersparnis mit sich bringt. Evident sind die mit der erfindungsgemäßen Bodenbehandlungsvorrichtung erzielbaren Vorteile beispielsweise dann, wenn man sich übliche Größen von typischen zu behandelnden Böden vor Augen hält. Es mag sein, dass die Aerifizierung eines Golfgreens mit einer Größe von ca. 500 m² durch eine Bedienperson wirtschaftlich erscheint. Vergleicht man jedoch den Aufwand, der für die Behandlung eines Fußballfeldes für den Hochleistungsspielbetrieb mit einer Größe von ungefähr 8000 m² und darüber erforderlich ist, werden dem Fachmann die Vorteile einleuchten. In letzterem Fall gilt dies insbesondere dann, wenn das Fußballfeld mit einer oberflächennah verlegten Rasenklimatisierungseinrichtung versehen ist mit nahe beieinander verlegten Rohrleitungen (seitlicher Abstand von ca. 10 cm bis 30 cm), deren Beschädigung durch in den Boden eingreifende Bodenbehandlungselemente vermieden werden soll, wobei jedoch zugleich ein möglichst tiefes Eindringen der Bodenbehandlungselemente gewünscht ist.

Die Bestimmung der Lage der Leitungen erfolgt bevorzugt im Bereich von wenigen Zentimetern, beispielsweise mit einer Genauigkeit von 5 cm oder weniger, vorzugsweise 3 cm oder weniger.

Besonders vorteilhaft ist es, wenn die Bodenbehandlungsvorrichtung selbstlenkend ausgestaltet ist. Die Bodenbehandlungsvorrichtung kann dadurch nicht nur längs einer Hauptbewegungsrichtung selbst verfahren. Durch die Möglichkeit, selbst zu lenken, lassen sich Bodenflächen noch vielseitiger behandeln. Gerade Bodenflächen mit komplexer Geometrie werden möglicherweise dadurch überhaupt erst von der erfindungsgemäßen Bodenbehandlungsvorrichtung behandelbar.

Die Fahreinrichtung kann beispielsweise an der Trageinrichtung gehaltene Räder, Rollen, Walzen und/oder Raupenketten zum Verfahren auf der Bodenfläche aufweisen. Die Bodenbehandlungsvorrichtung kann auf diese Weise nach Art eines Roboters selbsttätig auf der Bodenfläche verfahren. Dabei ist sie günstigerweise selbstlenkend ausgestaltet.

Alternativ oder ergänzend kann vorgesehen sein, dass die Fahreinrichtung an der Trageinrichtung gehaltene Räder, Rollen, Walzen und/oder Raupenketten zum Verfahren an einer Führungseinrichtung aufweist, die der Bodenbehandlungsvorrichtung zuordenbar ist. Beispielsweise ist an einer Sportanlage eine Führung vorgesehen, längs der die Bodenbehandlungsvorrichtung mittels der Fahreinrichtung verfahren kann. Bei einem Fußballfeld sind beispielsweise Führungen seitlich neben Begrenzungslinien des Spielfeldes positioniert, und die Bodenbehandlungsvorrichtung greift mit der Fahreinrichtung in die Führungen ein. Die Fahreinrichtung kann einen sich über das Spielfeld erstreckenden Träger der Trageinrichtung aufweisen, an dem die Bodenbehandlungselemente höhenverstellbar gehalten sind.

Von Vorteil ist es, wenn die Bodenbehandlungsvorrichtung gemäß einem vorgegebenen Bewegungsmuster relativ zum Boden verfahrbar ist. Beispielsweise wird die Bodenbehandlungsvorrichtung gemäß einem Mäandermuster über die Bodenfläche verfahren. Es kann vorgesehen sein, dass der Boden segmentweise von der Bodenbehandlungsvorrichtung behandelbar ist, wobei unterschiedliche Segmente oder Bereiche des Bodens nacheinander abgearbeitet werden und die Bodenbehandlungsvorrichtung bereichsweise gemäß einem vorgegebenen Bewegungsmuster abgefahren wird. Eine derartige Unterteilung der Bodenfläche in Segmente oder Bereiche ist zum Beispiel in der nachfolgend noch erwähnten Karte des Bodens/der Bodenfläche gespeichert.

Günstigerweise ist vorgesehen, dass eine flächendeckende oder im Wesentlichen flächendeckende Bearbeitung der Bodenfläche durchführbar ist. Dadurch kann eine vollständige Bearbeitung des Bodens sichergestellt werden.

Bei einer vorteilhaften Umsetzung kann vorgesehen sein, dass benachbarte Bahnen der Bodenbehandlungsvorrichtung bei der Bewegung über den Boden teilweise überlappen, um eine flächendeckende Bearbeitung sicherzustellen.

Günstig ist es, wenn die Bodenbehandlungselemente Injektionselemente sind, über die in deren in den Boden eingeführten Zustand Fluid in den Boden injizierbar ist, und wenn die Bodenbehandlungsvorrichtung eine Fluidbereitstellungseinrichtung aufweist, die mit den Injektionselementen fluidwirksam verbunden ist. Wie bereits erwähnt kann dadurch eine noch bessere Belüftung und/oder Bewässerung sowie zugleich eine Lockerung des Bodens durchgeführt werden, um das Rasenwachstum zu fördern. Die eingangs genannte Patentanmeldung DE 10 2015 115 991, deren Inhalt hiermit vollständig in die vorliegende Patentanmeldung einbezogen wird, beschreibt als Injektionselemente ausgestaltete Bodenbehandlungselemente. Deren Ausgestaltung sowie die Art und Weise der Beaufschlagung mit Fluid kann bei der vorliegenden Bodenbehandlungsvorrichtung ebenfalls vorgesehen sein.

Das Fluid kann ein Gas oder Gasgemisch sein, insbesondere Druckluft. Alternativ oder ergänzend kann als Fluid eine Flüssigkeit wie insbesondere Wasser eingesetzt werden.

Vorteilhafterweise ist die Fluidbereitstellungseinrichtung von einer Steuereinrichtung der Bodenbehandlungsvorrichtung zum Einstellen der Menge, des Druckes und/oder der Dauer der Beaufschlagung der Injektionselemente mit Fluid ansteuerbar. Dadurch kann eine möglichst bedarfsgerechte Fluidbeaufschlagung ausgeführt werden, um den Boden optimal zu behandeln.

Es kann vorgesehen sein, dass die Fluidbereitstellungseinrichtung abhängig von der Lage der Leitungen und/oder einer mittels der Detektionseinrichtung ermittelbaren oder vorgegebenen Beschaffenheit des Bodens ansteuerbar ist. Dadurch kann zum Beispiel dem Umstand Rechnung getragen werden, dass sich die Lage der Leitungen und/oder die Beschaffenheit des Bodens an unterschiedlichen Bereichen des Bodens voneinander unterscheidet bzw. unterscheiden. Denkbar ist dies am Beispiel eines Fußballfeldes zum Beispiel deshalb, weil das Spielfeld infolge der geographischen Ausrichtung und damit unterschiedlicher Belichtung oder Beschattung, Beregnung etc. bereichsweise unterschiedliche Eigenschaften aufweist und andersartige Anforderungen an die Bodenpflege stellt.

Anstelle der erwähnten Injektionselemente können die Bodenbehandlungselemente stift- oder dornartig ausgestaltet sein, wobei eine Fertigung als Hohlkörper oder eine Fertigung aus einem Vollmaterial denkbar ist. Andersartige Bodenbehandlungselemente sind zum Beispiel klingenförmig mit geradlinig erstreckter oder gebogener Klinge, um Einschnitte im Boden zu erzeugen.

Wie erwähnt, kann die Bodenbehandlungsvorrichtung eine Steuereinrichtung aufweisen. Diese kann Bestandteil der Detektionseinheit sein oder umgekehrt oder mit der Detektionseinheit gekoppelt sein.

Die Relativposition der Bodenbehandlungsvorrichtung und der Leitungen ist bevorzugt in zumindest zwei und vorzugsweise drei Raumrichtungen ermittelbar.

Wie bereits erwähnt ist es günstig, wenn mit der Detektionseinrichtung eine Verlegetiefe der Leitungen im Boden ermittelbar ist.

Alternativ oder ergänzend ist es von Vorteil, wenn mit der Detektionseinrichtung eine Verlaufsrichtung der Leitungen im Boden ermittelbar ist, d.h. insbesondere in einer Ebene parallel zur Bodenfläche und zum Beispiel bei konstanter oder im Wesentlichen konstanter Verlegetiefe.

Die Bodenbehandlungsvorrichtung wird bevorzugt gemäß einer Hauptbewegungsrichtung, beispielsweise nach vorgegebenem Bewegungsmuster, längs der (Verlaufsrichtung der) Leitungen verfahren. Die Verlaufsrichtung kann erfasst werden und/oder wird von der Bodenbehandlungsvorrichtung zum Beispiel anhand einer Karte des Bodens erwartet, in der die Lage der Leitungen hinterlegt ist.

Günstig ist es, wenn ein vorgegebenes Bewegungsmuster an die Lage und/oder die Orientierung der Leitungen anpassbar ist.

Die Hubeinrichtung kann bei einer vorteilhaften Umsetzung so ausgestaltet sein, dass die Bodenbehandlungselemente vertikal in den Boden einführbar sind.

Als günstig erweist es sich, wenn die Hubeinrichtung von einer Steuereinrichtung der Bodenbehandlungsvorrichtung ansteuerbar ist und wenn die Bodenbehandlungselemente abhängig von der Lage der Leitungen folgendermaßen in den Boden einführbar sind:
- zwischen nebeneinanderliegenden Leitungen; und/oder
- mit einer Einführtiefe, die maximal so groß ist wie die Verlegetiefe der Leitungen oder
- mit einer Einführtiefe, die mindestens so groß ist und vorzugsweise größer als die Verlegetiefe der Leitungen.

Als besonders vorteilhaft erweist es sich bei Einsatz einer Rasenklimatisierungs- und insbesondere Rasenheizeinrichtung, wenn die Bodenbehandlungselemente zwischen nebeneinanderliegende Leitungen mindestens bis zur Verlegetiefe der Leitungen und bevorzugt noch tiefer in den Boden eingeführt werden können, um eine Tiefenaerifizierung durchzuführen.

Es kann vorgesehen sein, dass der Bodenbehandlungsvorrichtung die Verlegetiefe der Leitungen bekannt ist, beispielsweise ist diese in einer Speichereinrichtung gespeichert. Das Erfassen der Relativposition der Leitungen zur Bodenbehandlungsvorrichtung kann sich dadurch vorteilhafterweise auf einen Verlauf der Leitungen im Boden beschränken.

Die Einführtiefe der Bodenbehandlungselemente kann konstant oder im Wesentlichen konstant gehalten werden. Denkbar ist auch, dass die Einführtiefe mit einer von der Steuereinrichtung ansteuerbaren Verstelleinrichtung anpassbar ist. Beispielsweise sind die Bodenbehandlungselemente höhenverstellbar an der Halteeinrichtung gehalten.

Von Vorteil ist es, wenn die Detektionseinrichtung eine Eignung aufweist zum Erfassen der Leitungen, um deren Relativposition zur Bodenbehandlungsvorrichtung zu ermitteln. Dies gibt die Möglichkeit, die Leitungen selbst mittels der Detektionseinrichtung zu detektieren. Aus einem Detektionssignal kann die Relativposition der Leitungen zur Bodenbehandlungsvorrichtung festgestellt werden. Bei der vorliegenden Ausführungsform erweist sich insbesondere eine magnetische oder elektrische Erfassung der Leitungen, die zu diesem Zweck eine magnetische bzw. elektrische Codierung aufweisen können, als vorteilhaft.

Die Bodenbehandlungsvorrichtung weist günstigerweise eine Speichereinrichtung auf, in der eine Karte des zu behandelnden Bodens gespeichert oder speicherbar ist. Als "Karte" wird vorliegend jegliche Information verstanden, anhand derer die Bodenbehandlungsvorrichtung ermitteln kann, welcher geographische Bereich zu behandeln ist. Dementsprechend kann als "Karte" auch ein umrissener Bereich der Bodenfläche an der Oberseite des Bodens angesehen werden. Als zu behandelnden Boden betrachtet die Bodenbehandlungsvorrichtung das gewissermaßen "unterhalb" der Bodenfläche angeordnete und von dieser bedeckte Erdreich mit den darin angeordneten Leitungen. Die Einfassung der Bodenfläche kann oder kann nicht durchgehend sein. Eine nichtdurchgehende Einfassung der Bodenfläche, die eine Karte des Bodens definiert, ist beispielsweise durch Landmarken definiert, die die Position des zu bearbeitenden Bodens festlegen und von der Bodenbehandlungsvorrichtung erfasst werden können. Auf derartige Landmarken wird nachfolgend noch eingegangen.

In der Karte ist die Lage der Leitungen bei einer vorteilhaften Ausführungsform vorzugsweise veränderbar dadurch hinterlegt, dass die Lage der Leitungen mit einer Positionsinformation in einem relativen Bezugssystem hinterlegt ist, welches von mindestens einer in der Karte hinterlegten Landmarke in vorgegebener räumlicher Beziehung zu den Leitungen definiert ist, wobei mittels der Detektionseinrichtung die relative Lage der Bodenbehandlungsvorrichtung und der mindestens einen Landmarke erfassbar ist zum Ermitteln der Lage der Leitungen relativ zur Bodenbehandlungsvorrichtung. Dies gibt die Möglichkeit, mit der Detektionseinrichtung die mindestens eine Landmarke zu erfassen und deren Relativposition zur Bodenbehandlungsvorrichtung festzustellen. Anhand der Karte kann dadurch auch die Relativposition der Bodenbehandlungsvorrichtung zu den Leitungen festgestellt werden.

Alternativ oder ergänzend ist bei einer vorteilhaften Umsetzung die Lage der Leitungen in der Karte vorzugsweise veränderbar dadurch hinterlegt, dass die Lage der Leitungen mit einer Positionsinformation in einem absoluten Bezugssystem hinterlegt ist, wobei mittels der Detektionseinrichtung die Position der Bodenbehandlungsvorrichtung im absoluten Positionssystem ermittelbar ist. Als absolutes Positionssystem kann zum Beispiel ein satellitengestütztes Navigationssystem (GPS etc.) zum Einsatz kommen, anhand dessen die Bodenbehandlungsvorrichtung fährt. Die Lage der Leitungen kann mit absoluten Positionsdaten aufgrund der Informationen in der Karte festgestellt werden.

Als Landmarken können alle möglichen Navigationshilfen zum Einsatz kommen, die von der Detektionseinrichtung erfasst werden können. Beispielsweise werden Begrenzungslinien eines Spielfeldes (etwa eines Fußballfeldes) als Landmarken angesehen, ferner Tore, Eckfahnen, Trainerbänke, Tribünen, Aufgänge, etc. Es bietet sich günstigerweise der Einsatz berührungslos detektierbarer Landmarken an, zum Beispiel per Funkverbindung und/oder optisch. Denkbar ist insbesondere der Einsatz von in bekannter Weise relativ zum Boden positionierten Funk-Landmarken, die über eine Bluetooth- oder RFID-Technologie erfasst werden können.

Als günstig erweist es sich, wenn in der Karte die Lage mindestens einer Landmarke in vorgegebener räumlicher Beziehung zum Boden hinterlegt ist, wobei mittels der Detektionseinrichtung die relative Lage der Bodenbehandlungsvorrichtung und der mindestens einen Landmarke erfassbar ist, und wenn beim Verfahren der Bodenbehandlungsvorrichtung relativ zum Boden, bevorzugt gemäß einem vorgegebenen Bewegungsmuster, mittels der Detektionseinrichtung die Lage der Leitungen relativ zur Bodenbehandlungsvorrichtung ermittelbar ist. Die Bodenbehandlungsvorrichtung verfährt dabei über die Bodenfläche, wobei sie sich an der mindestens einen Landmarke orientieren kann. Information bezüglich der mindestens einen Landmarke ist in der Karte gespeichert. Beim Verfahren kann zusätzlich die relative Lage der Leitungen zur Bodenbehandlungsvorrichtung ermittelt werden, um die Bodenbehandlungselemente in korrekter Soll-Lage in den Boden einzuführen.

Es kann bei der zuletzt genannten vorteilhaften Ausführungsform vorgesehen sein, dass eine Überprüfung der dabei ermittelten relativen Lage mit der Lage der Leitungen durchgeführt wird, welche in der Karte im absoluten oder relativen Bezugssystem hinterlegt ist, wobei im Fall einer Abweichung die Lage der Leitungen in der Karte aktualisiert werden kann. Dies erlaubt es, während der Bearbeitung des Bodens eine Überprüfung dahingehend vorzunehmen, ob die über die Detektionseinrichtung erfasste Lage der Leitungen mit der Lage der Leitungen übereinstimmt, die anhand der Karte erwartet wird. Zum einen kann dadurch sichergestellt werden, dass die Bodenbehandlungselemente an der vorgesehenen Soll-Position in den Boden eingeführt werden. Zum anderen kann im Fall einer Abweichung eine Aktualisierung einer möglicherweise fehlerbehafteten Lage der Leitungen in der Karte vorgenommen werden.

Alternativ oder ergänzend kann vorgesehen sein, dass eine Anpassung der Bewegung der Bodenbehandlungsvorrichtung relativ zum Boden durchgeführt wird, um ein Einführen der Bodenbehandlungselemente an der vorgesehenen Soll-Position sicherzustellen.

Alternativ oder ergänzend ist vorteilhafterweise vorgesehen sein, dass die Bodenbehandlungselemente relativ zur Trageinrichtung bewegbar sind, um ein Einführen der Bodenbehandlungselemente an der vorgesehenen Soll-Position sicherzustellen. Beispielsweise sind die Bodenbehandlungselemente an einer Halteeinrichtung festgelegt, die zumindest teilweise relativ zur Trageinrichtung bewegbar und insbesondere verschieblich ist, vorzugsweise in einer Ebene parallel zur Bodenfläche. Die Bodenbehandlungsvorrichtung kann beispielsweise die Fahrt gemäß einem Bewegungsmuster fortsetzen, die Halteeinrichtung kann relativ zur Trageinrichtung bewegt und insbesondere verschoben werden, so dass die Bodenbehandlungselemente an der Soll-Position in den Boden eingeführt werden können.

In der Karte ist die Lage der Leitungen günstigerweise veränderbar gespeichert, wobei bei einer Feststellung, dass die mittels der Detektionseinrichtung ermittelte Lage der Leitungen von der in der Karte gespeicherten Lage im relativen oder absoluten Bezugssystem abweicht, eine Aktualisierung der Lage der Leitungen in der Karte durchführbar ist.

Die Karte kann beispielsweise durch eine Bedienperson in der Speichereinrichtung bereitgestellt werden. Beispielsweise wird die Karte kabellos oder kabelgebunden von einer externen Steuereinrichtung durch die Bedienperson an die Bodenbehandlungsvorrichtung übertragen.

Alternativ oder ergänzend kann vorgesehen sein, dass durch die Bodenbehandlungsvorrichtung eine Lernfahrt durchführbar ist unter Ermittlung der Lage der Leitungen und/oder mindestens einer Landmarke in einem relativen und/oder einem absoluten Bezugssystem. Die bei der Lernfahrt erfassten Informationen können zum Erstellen der Karte herangezogen werden.

Die Lernfahrt kann auch unter Führung einer Bedienperson erfolgen.

Die mindestens eine Detektionseinrichtung ist oder weist zumindest eine der folgenden Sensoreinrichtungen auf:
- eine Magnetsensoreinrichtung zum Erfassen eines magnetischen Feldes;
- eine elektrische Sensoreinrichtung zum Erfassen eines leitenden und/oder polarisierbaren Materials;
- eine optische Sensoreinrichtung im sichtbaren und/oder infraroten und/oder ultravioletten Spektralbereich, insbesondere umfassend eine digitale Kamera und/oder eine Laser-Scan-Sensoreinrichtung;
- eine absolute Positionssensoreinrichtung, insbesondere für ein satellitengestütztes Navigationssystem;
- eine Funksensoreinrichtung, insbesondere umfassend einen Bluetooth-Sensor oder einen RFID-Sensor;
- eine Ultraschallsensoreinrichtung;
- eine thermische Sensoreinrichtung, womit beispielsweise Rohrleitungen einer Rasenheiz- oder Rasenkühleinrichtung im Betrieb erfassbar sind. Dies erlaubt es, aufgrund einer bestehenden Temperaturdifferenz zwischen den Leitungen und dem sie umgebenden Erdreich auf die Lage der Leitungen zu schließen. Die Temperatur der Leitungen ist bei einer Rasenheizeinrichtung höher als die Temperatur des Erdreiches, bei einer Rasenkühleinrichtung tiefer.

Informationen, die von der mindestens einen Sensoreinheit erfasst werden, können beispielsweise mittels Verfahren der Triangulation und/oder digitaler Bildverarbeitung extrahiert und zum Erfassen der Lage der mindestens einen Landmarke und/oder der Lage der Leitungen ausgewertet werden.

Als günstig erweist es sich, wenn Sensoren oder eine Sensoreinrichtung der Detektionseinrichtung in einer Bearbeitungsrichtung führend an der Bodenbehandlungsvorrichtung angeordnet sind. Beim Bewegen längs der Bearbeitungsrichtung können die Sensoren oder die Sensoreinrichtung insbesondere die der Bodenbehandlungsvorrichtung vorgelagert angeordneten Leitungen im Boden erfassen. Beim weiteren Verfahren der Bodenbehandlungsvorrichtung kann, sofern erforderlich, deren Kurs verändert und/oder die Bodenbehandlungselemente relativ zur Trageinrichtung wie vorstehend vorgeschlagen bewegt werden.

Die Bodenbehandlungselemente sind günstigerweise, wie erwähnt, an einer ihnen zugeordneten gemeinsamen Halteeinrichtung gehalten, wobei die Halteeinrichtung bevorzugt zumindest teilweise relativ zur Trageinrichtung in zumindest einer Raumrichtung quer zur Einführ- und Ausziehbewegung abhängig von der ermittelten Lage der Leitungen bewegbar und insbesondere verschiebbar ist. Dies gibt vorteilhafterweise insbesondere die Möglichkeit, die Fahrtrichtung, zum Beispiel gemäß dem vorgegebenen Bewegungsmuster, konstant oder im Wesentlichen konstant zu halten. Eher geringfügige Korrekturen der Position der Bodenbehandlungselemente können durch Bewegen der Bodenbehandlungselemente relativ zur Trageinrichtung durchgeführt werden, damit diese an der korrekten Soll-Position in den Boden eingeführt werden können.

Dementsprechend ist es günstig, wenn beim Verfahren der Bodenbehandlungsvorrichtung relativ zum Boden eine Bewegung gemäß einem vorgegebenen Bewegungsmuster beibehalten oder im Wesentlichen beibehalten wird und die Halteeinrichtung zumindest teilweise relativ zur Trageinrichtung bewegbar und insbesondere verschiebbar ist.

Die Halteeinrichtung kann ein Tragteil aufweisen, das an der Trageinrichtung festgelegt ist, und ein zu diesem bewegliches Halteteil, an dem die Bodenbehandlungselemente gehalten sind.

Es kann vorgesehen sein, dass die Bodenbehandlungselemente lösbar sind, beispielsweise um gegen andere Bodenbehandlungselemente ausgetauscht werden zu können. Beispielsweise ist vorgesehen, dass die Bodenbehandlungselemente an einem Halteteil der Halteeinrichtung gehalten sind, welches von der Bodenbehandlungsvorrichtung gelöst und durch ein weiteres Halteteil mit andersartigen Bodenbehandlungselementen ersetzt werden kann. Dies gibt auf konstruktiv einfache und benutzerfreundliche Weise die Möglichkeit, eine vielseitig einsetzbare Bodenbehandlungsvorrichtung bereitzustellen, mit der unterschiedliche Arten der Bodenbehandlung vorgenommen werden können. Austauschbare Bodenbehandlungselemente umfassen zum Beispiel Injektionselemente, stift- oder dornförmige oder klingenförmige Bodenbehandlungselemente.

Denkbar ist ferner, dass anstelle der Halteeinrichtung mit den Bodenbehandlungselementen eine Halteeinrichtung zum Einsatz kommt, die zur oberflächlichen Pflege der Bodenfläche geeignete Werkzeuge umfasst. Zu nennen sind hier zum Beispiel federnd gelagerte Elemente zum "Striegeln" der Bodenfläche, Borsten oder Zinken zum Bürsten bzw. Rechen oder Ebnen der Bodenfläche.

Auch der Einsatz andersartiger Werkzeuge an der Bodenbehandlungsvorrichtung ist denkbar. Zu nennen ist beispielsweise ein Mähwerkzeug, das in der Bodenbehandlungsvorrichtung festgelegt oder festlegbar sein kann, insbesondere im Austausch gegen die Bodenbehandlungselemente. Alternativ oder ergänzend kann als Werkzeug eine Aufnahmevorrichtung für Rasenschnittgut vorgesehen sein, eine Einrichtung zum Erkennen des Zustands des Bewuchses (etwa im Hinblick auf eine Überprüfung auf Pflanzenkrankheiten) und/oder eine Schneeräumeinrichtung, um die Bodenfläche von Schnee zu befreien. Als weiteres Beispiel für ein festgelegtes oder festlegbares Werkzeug ist ein Werkzeug zum Zeichnen von Linien auf der Bodenfläche zu nennen, das zur Markierung von Spielflächen etwa bei einem Fußballfeld eingesetzt werden kann. Auch Werbung oder Logos, etwa am Spielfeldrand, könnten gezeichnet werden.

Die Bodenbehandlungsvorrichtung kann batteriebetrieben sein. Die mindestens eine Batterie kann aufladbar und/oder austauschbar sein. Alternativ oder ergänzend ist denkbar, dass die Bodenbehandlungsvorrichtung einen Antrieb basierend auf einem fossilen Brennstoff und/oder einen Brennstoffzellenantrieb umfasst.

Wie bereits erwähnt, betrifft die vorliegende Offenbarung auch eine Leitung.

Die eingangs gestellte Aufgabe wird durch eine Leitung gelöst, bei der es sich insbesondere um eine Rohrleitung einer Rasenklimatisierungseinrichtung für eine Sportanlage handelt, zur Detektion durch eine Bodenbehandlungsvorrichtung der vorstehend genannten Art, wobei die Leitung eine von der Detektionseinrichtung der Bodenbehandlungsvorrichtung erfassbare Codiereinrichtung aufweist.

Die Codiereinrichtung erlaubt es der Detektionseinrichtung der Bodenbehandlungsvorrichtung, die Leitung zu detektieren, so dass die Lage der Leitung in zumindest einer Raumrichtung relativ zur Bodenbehandlungsvorrichtung ermittelt werden kann.

Günstigerweise ist die Codiereinrichtung integral in die Leitung eingearbeitet, beispielsweise eingegossen, eingespritzt, eingewalzt oder eingezogen.

Es kann auch vorgesehen sein, dass die Codiereinrichtung durch die Leitung als solche ausgebildet wird.

Eine Kennzeichnung oder Beschriftung der Leitung kann die Codiereinrichtung umfassen oder ausbilden.

Als günstig erweist es sich zum Beispiel, wenn die Codiereinrichtung magnetisch und/oder elektrisch wirksam ist. Für Rohrleitungen einer Rasenklimatisierungseinrichtung erweist sich eine magnetisch wirksame Codiereinrichtung als besonders vorteilhaft. Beispielsweise ist ein magnetisches oder magnetisierbares Material in die Rohrleitung eingezogen, eingegossen oder eingespritzt, wodurch die Rohrleitung von einer magnetischen Sensoreinrichtung wirkungsvoll erfasst werden kann.

Die Leitung ist zum Beispiel eine Rohrleitung mit einer Außenwand und einer Innenwand, wobei die Codiereinrichtung bevorzugt zwischen der Außenwand und der Innenwand positioniert ist.

Die Rohrleitung hat beispielsweise einen Durchmesser von ca. 10 mm bis 30 mm, besonders bei einer Rasenklimatisierungseinrichtung.

Die Leitung kann insbesondere ein Verbundrohr sein, beispielsweise ein Kunststoff-Metall-Verbundrohr.

Wie eingangs ebenfalls erwähnt, betrifft die vorliegende Erfindung auch ein Bodenbehandlungssystem. Die eingangs gestellte Aufgabe wird durch ein erfindungsgemäßes Bodenbehandlungssystem gelöst, das eine Bodenbehandlungsvorrichtung der vorstehend genannten Art und mindestens eine von der Detektionseinrichtung der Bodenbehandlungsvorrichtung detektierbare Landmarke umfasst, die in definierte(r) räumliche(r) Position zu den Leitungen bringbar ist oder steht.

Die Vorteile, die bei der Erläuterung vorteilhafter Ausführungsformen der Bodenbehandlungsvorrichtung unter Einsatz der mindestens einen Landmarke erwähnt wurden, können durch das Bodenbehandlungssystem ebenfalls erzielt werden. Diesbezüglich und hinsichtlich vorteilhafter Ausführungsformen des Bodenbehandlungssystems kann auf die voranstehenden Ausführungen verwiesen werden.

Die mindestens eine Landmarke ist vorzugsweise eine optische Landmarke und/oder Funk-Landmarke.

Vorzugsweise ist die mindestens eine Landmarke frei positionierbar.

Günstigerweise ist eine Mehrzahl von Landmarken vorgesehen, die relativ zueinander frei positionierbar sind und/oder die von der Bodenbehandlungsvorrichtung unterscheidbar sind.

Als günstig erweist es sich, wenn das Bodenbehandlungssystem eine Station für die Bodenbehandlungsvorrichtung umfasst, die von dieser selbsttätig aufsuchbar ist zum Austauschen und/oder Auffüllen und/oder Nachladen einer Betriebskomponente oder eines Betriebsstoffes. Die Autonomie der Bodenbehandlungsvorrichtung kann dadurch gesteigert werden.

Beispielsweise ist vorgesehen, dass die Bodenbehandlungsvorrichtung mindestens eine wiederaufladbare oder austauschbare Batterie aufweist, die an der Station aufladbar oder austauschbar ist, einen Vorratsbehälter für an der Station auffüllbaren Brennstoff und/oder dass die Station eine Fluidnachfülleinrichtung zum Auffüllen einer Fluidbereitstellungseinrichtung der Bodenbehandlungsvorrichtung aufweist. Dies gibt die Möglichkeit, die Batterie aufzuladen oder auszutauschen, den Vorratsbehälter aufzufüllen und/oder die Fluidbereitstellungseinrichtung aufzufüllen. Die Einsatzdauer der Bodenbehandlungsvorrichtung kann dadurch verlängert werden.

An der Station kann bevorzugt alternativ oder ergänzend ein Austausch der Bodenbehandlungselemente automatisiert durchführbar sein.

Die nachfolgende Beschreibung bevorzugter Ausführungsformen der Erfindung dient im Zusammenhang mit der Zeichnung der näheren Erläuterung der Erfindung. Es zeigen:
- Figur 1:: eine Draufsicht auf eine zu behandelnde Sportanlage (Fußballfeld) mit einem erfindungsgemäßen Bodenbehandlungssystem, das eine erfindungsgemäße Bodenbehandlungsvorrichtung umfasst;
- Figur 2:: eine vergrößerte Darstellung von Detail A in Figur 1;
- Figur 3:: eine schematische Seitenansicht der Bodenbehandlungsvorrichtung aus Figur 1;
- Figur 4:: ein schematisches Blockschaltbild der Bodenbehandlungsvorrichtung aus Figur 1;
- Figur 5:: ein schematisches Blockschaltbild einer der Bodenbehandlungsvorrichtung zugeordneten Station des Bodenbehandlungssystems aus Figur 1;
- Figur 6:: eine schematische Teildarstellung einer Leitung, ausgestaltet als Rohrleitung;
- Figur 7:: eine weitere schematische Darstellung einer Leitung, ausgestaltet als Rohrleitung;
- Figuren 8 bis 12:: die Funktionsweise der Bodenbehandlungsvorrichtung aus Figur 1 im bestimmungsgemäßen Gebrauch während der Behandlung eines Bodens, wobei die Bodenbehandlungsvorrichtung über die Bodenfläche verfahren wird und Bodenbehandlungselemente relativ zur Trageinrichtung bewegt werden; und
- Figur 13:: eine Darstellung entsprechend Figur 1 bei einer weiteren Ausführungsform des erfindungsgemäßen Bodenbehandlungssystems.

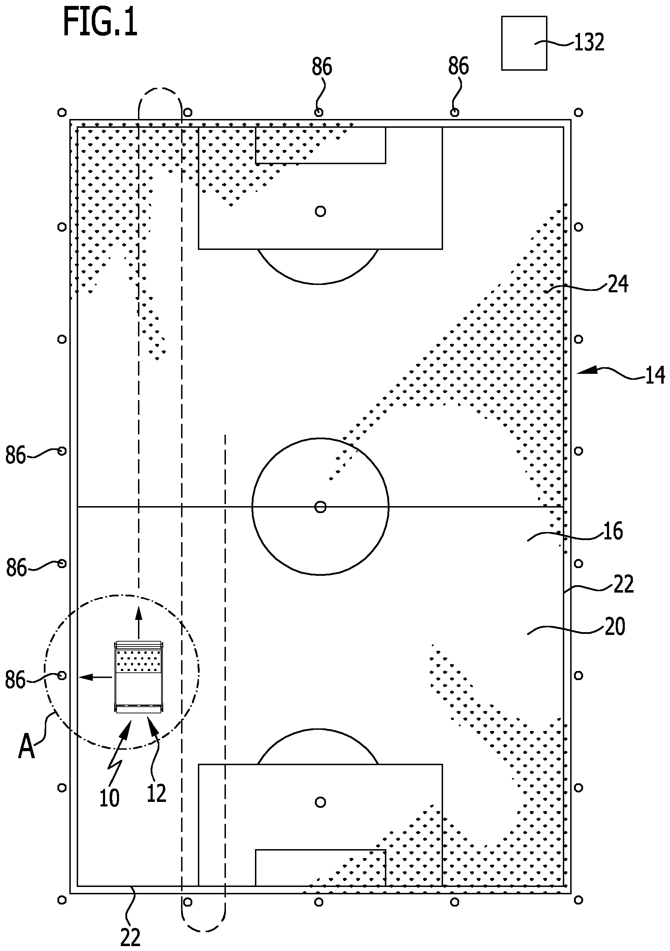

Figur 1 zeigt in schematischer Draufsicht eine bevorzugte Ausführungsform eines erfindungsgemäßen Bodenbehandlungssystems, das mit dem Bezugszeichen 10 belegt ist und nachfolgend vereinfachend als "System" bezeichnet wird. Das System 10 umfasst eine vorteilhafte Ausführungsform einer erfindungsgemäßen Bodenbehandlungsvorrichtung, belegt mit dem Bezugszeichen 12 und nachfolgend vereinfachend als "Vorrichtung" bezeichnet.

Figur 1 zeigt weiter eine Sportanlage 14, ausgestaltet als Fußballfeld 16. Als solches wird vorliegend ein mit dem System 10 zu behandelnder Boden 18 verstanden, zu dem auch die ihn obenseitig begrenzende Bodenfläche 20 einschließlich etwaiger darauf angebrachter Markierungen 22 (Torauslinien, Seitenlinien etc.) sowie Randbereichen (Toraus, Seitenaus etc.) gezählt wird.

Der Boden 18 umfasst einen Rasenbewuchs 24. Bei dem Rasenbewuchs 24 kann es sich um einen Naturrasen und speziell einen Rollrasen handeln oder um einen sogenannten "Hybridrasen", der ein Gemisch aus Kunstrasen und Naturrasen umfasst.

Im Boden 18 sind Leitungen 26 einer im Übrigen nicht gezeigten Rasenklimatisierungseinrichtung 28 verlegt. Die Leitungen 26, auf die nachfolgend noch eingegangen wird, sind Rohrleitungen in einer Verlegetiefe von ungefähr 7 cm bis 15 cm unterhalb der Bodenfläche 20. Günstigerweise sind die Leitungen 26 in Längsrichtung des Fußballfeldes 16 verlegt und äquidistant zueinander angeordnet. Jedoch ist auch denkbar, dass die Leitungen 20 in Querrichtung des Fußballfeldes 16 oder in anderer Orientierung verlegt sind. Der Abstand benachbarter Leitungen 26 beträgt beispielsweise ungefähr 10 cm bis 30 cm. Zum Verlegen der Leitungen 26 kann eine Verlegevorrichtung zum Einsatz kommen, wie sie in der DE 10 2014 105 577 A1 oder der nicht-vorveröffentlichten Patentanmeldung DE 10 2015 110 547 beschrieben ist.

Die oberflächennah verlegten Leitungen 26 erlauben eine hohe Energieeffizienz der Rasenklimatisierungseinrichtung, da der Wärmeverlust von der Lage der Leitungen 26 bis zur Bodenfläche 20 gering gehalten werden kann. Der Betrieb der Rasenklimatisierungseinrichtung 28 insbesondere als Rasenheizeinrichtung führt zur Erwärmung des Bodens 18. Dies kann zur Folge haben, dass der Boden 18 in gewissem Ausmaß durch Erwärmung austrocknet und verkrustet. Zur Bodenpflege, um die Belüftung und die Bewässerung des Bodens 18 zu fördern, den Boden 18 zu lockern und die Drainagewirkung zu steigern und im Ergebnis das Wachstum des Rasenbewuchses 24 zu begünstigen, kann daher das erfindungsgemäße Bodenbehandlungssystem 10 zum Einsatz kommen.

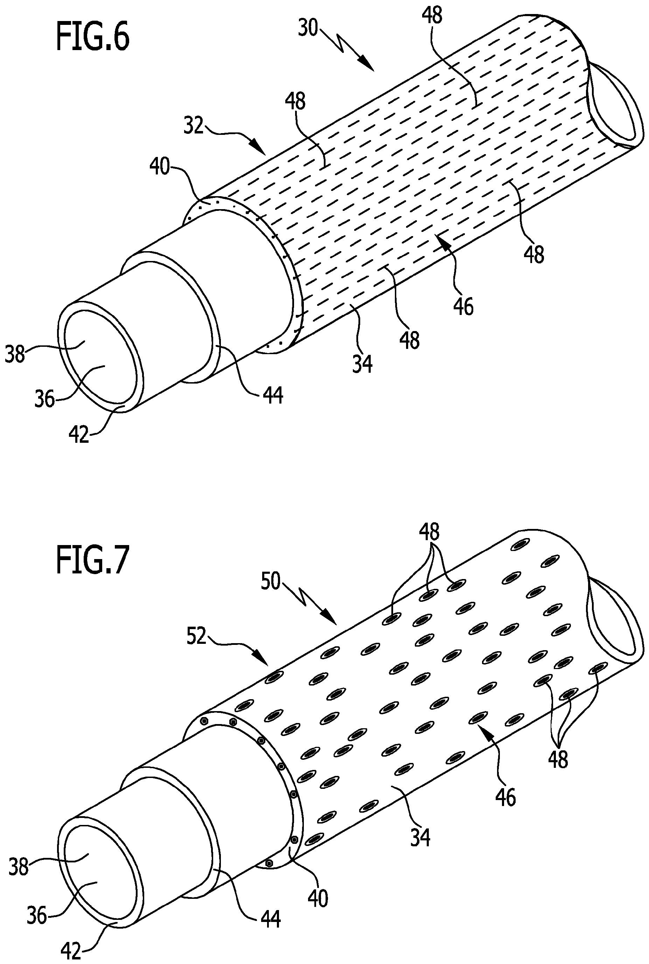

Figur 6 zeigt eine erste bevorzugte Ausführungsform 30 einer Leitung 26, die zur Detektion durch die Vorrichtung 12 zum Einsatz kommen kann. Die Leitung 30 ist ausgestaltet als Rohrleitung 32, bei der es sich insbesondere um ein Verbundrohr handelt. Die Rohrleitung 32 weist eine Außenwand 34 und eine Innenwand 36 auf, die ein Lumen 38 einfasst.

Das Verbundrohr umfasst eine außenseitige, erste Kunststoffschicht 40 sowie eine innenseitige, zweite Kunststoffschicht 42 sowie eine dazwischenliegende Metallschicht 44. Beispielsweise umfassen die Kunststoffschichten 40, 42 Polypropylen (PP) oder Polyethylen (PE) und die Metallschicht 44 Aluminium, so dass es sich bei der Rohrleitung 32 um ein PP-Al-Verbundrohr oder ein PE-AI-Verbundrohr handeln kann.

Die Leitung 30 umfasst ferner eine Codiereinrichtung 46 mit Codierelementen 48. Die Codierelemente 48 sind vorzugsweise integral in die Leitung 30 eingearbeitet, beispielsweise durch Einziehen, Eingießen oder Einwalzen. Bevorzugt sind die Codierelemente 48 magnetisch wirksam und insbesondere aus einem magnetischen, speziell ferromagnetischen Material gefertigt.

Bei der Leitung 30 sind die Codierelemente 48 als magnetische Fäden oder Drähte ausgestaltet, die in die erste Kunststoffschicht 40 eingebettet sind und in Längsrichtung der Leitung 30 verlaufen. Bevorzugt sind die Codierelemente 48 dabei homogen verteilt und/oder über den gesamten Umfang der Leitung 30 verteilt.

Figur 7 zeigt eine weitere, mit dem Bezugszeichen 50 belegte vorteilhafte Ausführungsform einer Leitung 26. Die Leitung 50 ist ebenfalls als Rohrleitung 52 zum Zusammenwirken mit der Vorrichtung 12 ausgestaltet.

Für gleiche oder gleichwirkende Merkmale und Bauteile der Leitungen 30 und 50 werden identische Bezugszeichen benutzt.

Bei der Leitung 50, ebenfalls ein Kunststoff-Metall-Verbundrohr, sind die Codierelemente 48 magnetische Partikel 54. Die Partikel 54 sind bevorzugt in die erste Kunststoffschicht 40 eingebettet, beispielsweise durch Eingießen. Günstigerweise sind die Partikel 54 homogen und/oder über den gesamten Umfang der Leitung 50 angeordnet.

Über die jeweilige Codiereinrichtung 46, darauf wird nachfolgend noch eingegangen, können die Leitungen 30 oder 50 anhand einer magnetischen Sensoreinrichtung erkannt werden. Dies gibt die Möglichkeit, die Lage der Leitungen 30, 50 im Boden 18 anhand der magnetischen Sensoreinrichtung zu ermitteln.

Der Außendurchmesser der Leitungen 30 und 50 beträgt jeweils ca. 25 mm bei einer Wandstärke von ca. 2,5 mm und einem Innendurchmesser von ca. 20 mm.

Die Vorrichtung 12 umfasst eine Trageinrichtung 56, die vorliegend als Tragrahmen 58 ausgestaltet ist. Am Tragrahmen 58 ist eine Fahreinrichtung 60 gehalten. Die Fahreinrichtung 60 umfasst vorliegend Räder 62 sowie einen in der Zeichnung nicht dargestellten Fahrantrieb, mit dem zumindest ein Teil der Räder 62 angetrieben werden kann. Beispielsweise ist hierbei der Einsatz von zumindest zwei Fahrantrieben denkbar, die einem jeweiligen Rad 62 zugeordnet sind, unter Verwendung eines elektronischen Differentials. Denkbar ist auch der Einsatz zumindest eines lenkbaren Rades 62.

Im Ergebnis ist die Fahreinrichtung 60 so ausgestaltet, dass die Vorrichtung 12 selbstfahrend und selbstlenkend ist. Die Fahreinrichtung 60 kann von einer Steuereinrichtung 64 der Vorrichtung 12 in geeigneter Weise angesteuert werden, um diese über die Bodenfläche 20 zu verfahren. Beispielsweise ist dabei vorgesehen, dass die Vorrichtung 12 gemäß einem vorgegebenen Bewegungsmuster verfahren wird. Hierbei, dies ist in Figur 1 anhand einer gestrichelten Linie 66 angedeutet, kann insbesondere das Verfahren gemäß einem Mäandermuster vorteilhaft sein.

Die Orientierung der Bahnen des Mäandermusters wird bevorzugt so gewählt, dass die Hauptbewegungs- oder Bearbeitungsrichtung der Vorrichtung 12 in Verlaufsrichtung der Leitungen 26 verläuft, deren Lage wie nachfolgend erläutert ermittelt wird.

Der Abstand benachbarter Bahnen des Mäandermusters kann beispielsweise so gewählt sein, dass ein jeweiliger, von der Vorrichtung 12 erfassbarer Arbeitsbereich an einen Arbeitsbereich grenzt, der beim Verfahren längs der benachbarten Bahn erfasst wird. Auch ein Überlapp benachbarter Arbeitsbereiche, die beim Verfahren längs benachbarter Bahnen erfasst werden, ist möglich. Im Ergebnis kann die Bodenfläche 20 von der Vorrichtung vorzugsweise flächendeckend wie nachfolgend erläutert bearbeitet werden.

Zur Erzielung der Flächendeckung kann auch vorgesehen sein, dass die Bodenfläche 20 bereichsweise behandelt wird, beispielsweise ist diese in einzelne Segmente unterteilt, die nacheinander anhand eines jeweiligen vorgegebenen Bewegungsmusters von der Vorrichtung 12 abgefahren werden.

Die Vorrichtung 12 umfasst eine Speichereinrichtung 68 in Wirkverbindung mit der Steuereinrichtung 64, in der ein entsprechendes Bewegungsmuster gespeichert sein kann.

Räder 62 sind an einer Vorderseite 70 und einer Rückseite 72 am Tragrahmen 58 gehalten. "Vorderseite" und "Rückseite" sind vorliegend auf eine Bearbeitungsrichtung 74 bezogen aufzufassen. Die Bearbeitungsrichtung 74 entspricht einer Hauptbewegungsrichtung der Vorrichtung 12 im bestimmungsgemäßen Gebrauch beim Bewegen über die Bodenfläche 20.

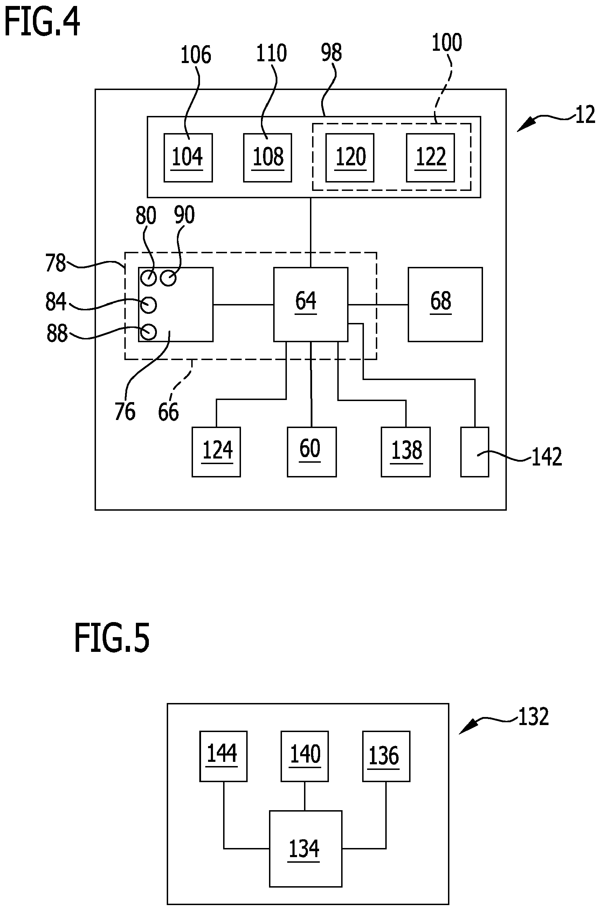

Die Vorrichtung 12 umfasst eine Sensoreinrichtung 76, die mit der Steuereinrichtung 64 gekoppelt ist. Denkbar ist auch, dass die Sensoreinrichtung 76 in die Steuereinrichtung 64 integriert ist oder durch diese gebildet wird oder umgekehrt. Die Sensoreinrichtung 76 und die Steuereinrichtung 64 bilden gemeinsam eine durch die gestrichelte Linie 66 angedeutete Detektionseinrichtung 78 der Vorrichtung 12, die vorzugsweise eine Mehrzahl von Sensoren aufweist. Insbesondere umfasst die Sensoreinrichtung 76 mindestens einen magnetischen Sensor 80 und einen Funksensor 82, so dass die Sensoreinrichtung 76 eine Magnetsensoreinrichtung und eine Funksensoreinrichtung gleichermaßen ausbildet. Weitere Sensoren, angedeutet in Figur 4, können ebenfalls vorhanden sein.

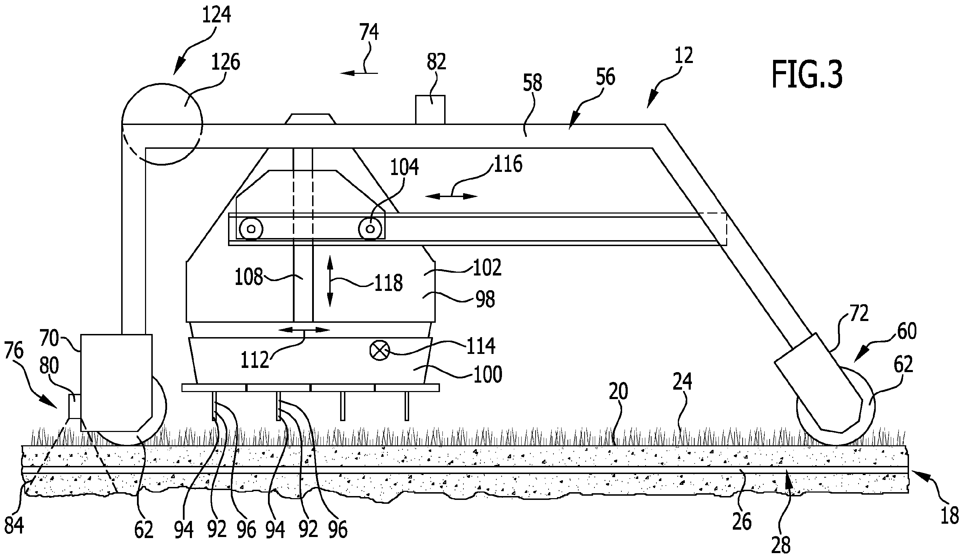

Der magnetischen Sensor 80 ist vorliegend an der Vorderseite 70 in der Bearbeitungsrichtung 74 führend an der Vorrichtung 12 angeordnet. Ein Sensorbereich 84 des Magnetsensors 80 ist in Richtung des Bodens 18 gerichtet (Figur 3). Dadurch ist die Möglichkeit gegeben, selbst beim Verfahren der Vorrichtung 12 über die Detektion der Codiereinrichtung 46 die Leitungen 26 zu erfassen. Ein diesbezügliches Sensorsignal kann von der Detektionseinrichtung 78 ausgewertet werden, um die relative Lage der Leitungen 26 zur Vorrichtung 12 zu ermitteln. Dabei kann sowohl die Verlegetiefe der Leitungen 26 festgestellt werden als auch deren Verlauf in den beiden weiteren Raumrichtungen im Boden 18, insbesondere parallel zur Bodenfläche 20.

Der Funksensor 82 ist zum Empfang eines Funksignals ausgestaltet, das von Funk-Landmarken 86 des Systems 10 ausgesandt werden kann. Die Funk-Landmarken 86 sind insbesondere Bluetooth-Landmarken zum Aussenden eines Bluetooth-Signals und der Funksensor 82 dementsprechend ein Bluetooth-Empfänger. Alternativ können UWB-Landmarken und ein UWB-Sensor zum Einsatz kommen.

Die Funk-Landmarken 86 sind vorliegend mit einer jeweiligen Kennzeichnung versehen, so dass die Detektionseinrichtung 78 ermitteln kann, das Signal welcher Funk-Landmarke 86 in welcher Stärke detektiert wird. Mit Mitteln beispielsweise der Triangulation kann die Detektionseinrichtung 78 dadurch die relative Position der Vorrichtung relativ zu den Funk-Landmarken 86 ermitteln.

Im vorliegenden Beispiel sind die Funk-Landmarken 86 so um das Fußballfeld 16 herum positioniert, dass sichergestellt ist, dass an jeder Stelle des Fußballfeldes 16 hinreichende Funksignale von der Detektionseinrichtung 78 empfangen werden können, um eine eindeutige Positionsbestimmung vornehmen zu können. Die Landmarken 86 sind bevorzugt im Boden angeordnet. Es kann alternativ oder ergänzend vorgesehen sein, dass Funk-Landmarken auch im Boden 18 im Bereich des Spielfeldinneren angeordnet sind, um dies sicherzustellen.

In der Speichereinrichtung 68 ist eine Karte des zu behandelnden Bodens einschließlich der Lage der Funk-Landmarken 86 gespeichert. Auf diese Weise kann durch Positionsbestimmung der Vorrichtung 12 relativ zu den Funk-Landmarken 86 bestimmt werden, welche Position die Vorrichtung 12 auf dem Fußballfeld 16 einnimmt. Die Funk-Landmarken 86 definieren dadurch ein relatives Bezugssystem, in dem vorzugsweise auch die Position der Leitungen 26 in der Karte hinterlegt ist. Dies gibt insbesondere die Möglichkeit, durch eine Bestimmung der Relativposition der Vorrichtung 12 zu den Funk-Landmarken 86 die Lage der Leitungen 26 relativ zur Vorrichtung 12 zu ermitteln, ohne dass die Leitungen 26 mittels der Detektionseinrichtung 78 erfasst und hinsichtlich ihrer Position geortet werden müssen.

Über die Funk-Landmarken 86 hinaus können weitere Landmarken von der Vorrichtung 12 ausgewertet werden, die mit einer entsprechenden Information in der Karte des Bodens 18 in der Speichereinrichtung 68 hinterlegt sein können. Beispielsweise kommt zum Erfassen der weiteren Landmarken ein optischer Sensor 88 der Sensoreinrichtung 76 zum Einsatz. Der optische Sensor 88 ist oder umfasst zum Beispiel eine digitale Kamera oder eine Laser-Scan-Sensoreinrichtung. Als optisch auswertbare Landmarken können zum Beispiel Markierungen oder Begrenzungen am Spielfeld zum Einsatz kommen, Tore, Eckfahnen, Trainerbänke, Tribünen, Aufgänge, etc.

Möglich ist auch, dass die Positionsbestimmung der Vorrichtung 12 relativ zu den Funk-Landmarken 86 auf Übereinstimmung dadurch geprüft wird, dass die Position der Vorrichtung 12 relativ zu den optischen Landmarken ermittelt und unter Heranziehung der Relativposition der optischen Landmarken und der Funk-Landmarken 86 eine Überprüfung der Positionsbestimmung durchgeführt wird.

Weiter kann ein absoluter Positionssensor 90 herangezogen werden. Beispielsweise sind in der Karte absolute Positionsdaten der Leitungen 26 und/oder von Landmarken wie den Funk-Landmarken 86 hinterlegt.

Selbst wenn in der Karte die Lage der Leitungen 26 hinterlegt ist und auf diese Weise durch Erfassen der Landmarken festgestellt werden kann, wie die relative Lage der Vorrichtung 12 und der Leitungen 26 ist, ist es von Vorteil, wenn eine derartige Bestimmung auch, wie bereits erläutert, unter Einsatz des Magnetsensors 80 während der Bewegung der Vorrichtung 12 erfolgen kann.

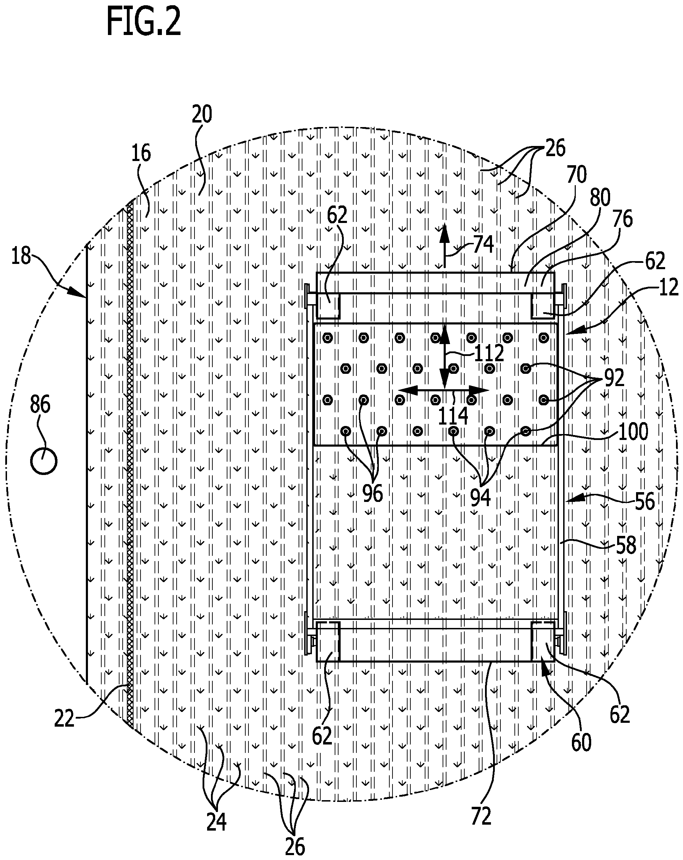

Die Vorrichtung 12 umfasst zum Behandeln des Bodens 18 Bodenbehandlungselemente 92. Diese sind vorliegend als Injektionselemente 94 ausgestaltet und haben die Form von hohlkörperförmigen Nadeln 96. Es ist eine Mehrzahl von Nadeln 96 vorgesehen, die in hintereinander liegenden Reihen bezüglich der Längsrichtung der Vorrichtung 12 und seitlich nebeneinander positioniert sind (Figur 2). Dabei nehmen die Nadeln 96 vorzugsweise Gitterplätze eines hexagonalen Gitters ein. Der seitliche Abstand der Nadeln 96 quer zur Längsrichtung der Vorrichtung 12 ist so gewählt, dass er vorzugsweise mit dem Abstand der Leitungen 26 im Boden 18 übereinstimmt.

Zum Halten der Nadeln 96 an der Trageinrichtung 56 ist eine Halteeinrichtung 98 vorgesehen. Die Halteeinrichtung 98 umfasst ein Halteteil 100, an dem die Nadeln 98 gemeinsam gehalten sind, sowie ein Tragteil 102.

Über das Tragteil 102 ist die Halteeinrichtung 98 beweglich am Tragrahmen 58 gehalten. Eine Verstelleinrichtung 104, ausgestaltet als Verschiebeeinrichtung 106, erlaubt das Verschieben der Halteeinrichtung 98 relativ zum Tragrahmen 58 in Längsrichtung der Vorrichtung 12.

Eine Hubeinrichtung 108, ausgestaltet als Verschiebeeinrichtung 110, erlaubt das Anheben und Absenken der Halteeinrichtung 98 relativ zum Tragrahmen 58. Pfeile 116, 118 symbolisieren die Verschiebemöglichkeit der Halteeinrichtung 98 relativ zum Tragrahmen 58. Die Halteeinrichtung 98, die Nadeln 96 und die Hubeinrichtung 108 sind so ausgestaltet, dass die Nadeln 96 vertikal in den Boden 18 eingeführt und aus diesem angehoben werden können.

Das Halteteil 100 ist relativ zum Tragteil 102 ebenfalls beweglich. Vorzugsweise ist eine Bewegung in einer Ebene quer zur Einführ- und Ausziehrichtung der Nadeln 96 möglich, d.h. insbesondere in Längsrichtung und in Querrichtung der Vorrichtung 12. Zum Verschieben des Halteteils 100 in Längsrichtung der Vorrichtung ist eine Verschiebeeinrichtung 120 vorgesehen. Zum Verschieben in Querrichtung kommt eine Verschiebeeinrichtung 122 zum Einsatz (Figur 4). Pfeile 112 und 114 in Figur 2 symbolisieren die Verschiebemöglichkeit des Halteteils 100 relativ zum Tragteil 102.

Die Verschiebeeinrichtungen 106, 110, 120 und 122 können pneumatisch, hydraulisch, mechanisch, magnetisch und/oder elektrisch betätigbar sein und sind gesondert von der Steuereinrichtung 64 ansteuerbar.

Die Vorrichtung 12 umfasst eine Fluidbereitstellungseinrichtung 124, um den Nadeln 96 Fluid und insbesondere ein Gasgemisch wie Druckluft bereitzustellen. Die Fluidbereitstellungseinrichtung 124 weist einen Fluidbehälter 126 auf (nur in Figur 3 gezeigt), der beispielsweise am Tragrahmen 58 gehalten ist. Der Fluidbehälter 126, dies ist in der Zeichnung nicht gezeigt, steht mit den Nadeln 96 jeweils in fluidwirksamer Verbindung. Zu diesem Zweck sind Fluidleitungen vorgesehen, in die von der Steuereinrichtung 64 ansteuerbare Ventile geschaltet sein können (nicht gezeigt). Die Steuereinrichtung 64 kann ferner beispielsweise einen Kompressor der Fluidbereitstellungseinrichtung 124 ansteuern, um Fluid im Fluidbehälter bereitzustellen.

Bei dem Fluid handelt es sich vorzugsweise um Druckluft, mit der der Boden 18 über die Nadeln 96 beaufschlagt werden kann. Nach dem Einführen der Nadeln 96 in den Boden 18 wird unter Ansteuerung der Steuereinrichtung 64 Druckluft in den Boden 18 injiziert. Dies hat insbesondere die Wirkung, dass durch die Verdrängung des Bodens 18 Kanäle gebildet werden, über die Luft und Wasser besser in den Boden 18 eindringen können. Außerdem wird der Boden 18 durch die Druckluftinjektion so gelockert, dass sich Luft und Wasser im Boden 18 besser ausbreiten können, die Drainagewirkung gesteigert wird und außerdem das Wurzelwerk des Rasenbewuchses 24 bessere Ausbreitungsmöglichkeiten erhält. Im Ergebnis kann das Wachstum des Rasenbewuchses 24 dadurch gefördert werden.

Die Steuereinrichtung 64 kann die Dauer der Druckluftinjektion, die Menge und/oder den Druck sowie die Anzahl der Druckstöße steuern.

Nachfolgend wird unter Verweis insbesondere auf die Figuren 1 bis 3 sowie 8 bis 12 auf die Funktionsweise der Vorrichtung 12 eingegangen. Dabei wird angenommen, dass die Vorrichtung 12 einen Auftrag zum Behandeln des Bodens 18 hat, nämlich zur Aerifizierung des Bodens 18 mit Druckluft.

Anhand der in der Karte gespeicherten Positionsinformation der Funk-Landmarken 86 kann die Vorrichtung 12 ihre Relativposition zu diesen und damit auch relativ zum Fußballfeld 16 ermitteln. Wie erwähnt wird vorzugsweise auch die Relativposition zu den Leitungen 26 bereits anhand der in der Karte hinterlegten Informationen ermittelt.

Die Vorrichtung verfährt über das Fußballfeld 16 gemäß dem vorgegebenen Bewegungsmuster, zum Beispiel dem Mäandermuster. Der Verlauf des Bewegungsmusters kann anhand der Positionsinformation der Funk-Landmarken 86 gesichert werden.

Durch die zusätzliche Information über die Lage der Leitungen 26 kann die Vorrichtung 12 ihre relative Lage zu den Leitungen 26 bereits mit hoher Genauigkeit ermitteln (auf weniger als ca. 3 cm). Dies dient vorzugsweise auch dazu, die Bearbeitungsrichtung 74 längs der Verlaufsrichtung der Leitungen 26 auszurichten.

Die relative Lage der Leitungen 26 zur Vorrichtung ist insofern von Bedeutung, als die Nadeln 96 in die Zwischenräume zwischen den Leitungen 26 in den Boden 18 eingeführt werden sollten. Die Eindringtiefe der Nadeln 96 ist dabei vorzugsweise so groß, dass die Nadeln 96 zumindest bis zur Verlegetiefe der Leitungen 26 und bevorzugt noch tiefer in den Boden 18 eingreifen. Dadurch kann zum einen Beschädigung der Leitungen 26 durch die Nadeln 96 vermieden werden. Zum anderen ist sichergestellt, dass auch eine Tiefenaerifizierung unterhalb der Leitungen 26 ausgeführt werden kann. Der Boden 18 wird daher vom Wirksamkeitsbereich der Aerifizierung unterhalb der Leitungen 26 bis zur Oberfläche gelockert und belüftet.

Zudem kann während der Bewegung der Vorrichtung 12 mit dem Magnetsensor 80 die relative Lage der Vorrichtung 12 zu den Leitungen 26 ebenfalls ermittelt werden (auf weniger als ca. 3 cm). Die so ermittelte Lage kann auf Übereinstimmung mit der anhand der Informationen aus der Karte kontrolliert werden. Etwaige Fehler bei der Positionsbestimmung können auf diese Weise minimiert oder sogar eliminiert werden.

Entsprechendes gilt, wenn anstelle des relativen Bezugssystems der Landmarken ein absolutes Bezugssystem verwendet wird. Auch in diesem Fall kann während der Bewegung der Vorrichtung 12 über die Sensoreinrichtung 76 die Lage der Leitungen 26 zur Vorrichtung 12 bestimmt und auf Übereinstimmung mit der erwarteten Lage geprüft werden.

Bei fehlender oder vernachlässigbarer Abweichung der Lage der Leitungen 26 von der erwarteten Lage kann die Vorrichtung 12 ihre Fahrt gemäß dem Bewegungsmuster zur weiteren Behandlung des Bodens 18 fortsetzen.

Liegt die Abweichung oberhalb eines Schwellenwertes, ist es möglich, dass die Vorrichtung 12 eine Fahrtrichtungs- und Positionskorrektur vornimmt, indem die Steuereinrichtung 64 die Fahreinrichtung 60 in geeigneter Weise ansteuert.

Bei einer vorteilhaften Ausführungsform ist es möglich, dass die Vorrichtung 12 ihre Fahrt gemäß dem Bewegungsmuster fortsetzt und das Halteteil 100 relativ zum Tragteil 102 so verschoben wird, dass sichergestellt ist, dass die Nadeln 96 in gewünschter Soll-Lage in den Boden 18 eingeführt werden. Eine Verschiebung in Querrichtung 114 reicht üblicherweise aus, es kann jedoch alternativ oder ergänzend eine Verschiebung in Längsrichtung 112 erfolgen.

Alternativ oder ergänzend ist es bei einer Abweichung möglich, dass die in der Karte hinterlegte Lage der Leitungen 26 verändert und eine aktualisierte Karte gespeichert wird. Dies ist insbesondere dann von Vorteil, wenn sich ergibt, dass die relative Lage der Funk-Landmarken 86 und der Leitungen 26, wie sie während der Behandlung des Bodens ermittelt wird, von der relativen Lage abweicht, die in der Karte hinterlegt ist.

Unter Einsatz der erfindungsgemäßen Vorrichtung 12 kann der Boden 18 zügig und mit hoher Präzision behandelt werden. Dabei kann sichergestellt werden, dass die Aerifizierung über die Nadeln 96 in der korrekten Soll-Lage relativ zu den Leitungen 26 ausgeführt wird, um ein möglichst gutes Bodenbehandlungsergebnis zu erzielen und eine Beschädigung der Leitungen zu vermeiden.

Durch die selbstfahrende Vorrichtung 12 kann ein Arbeitseinsatz durch Bedienpersonen weitgehend unterbleiben, was eine Bodenbehandlung zu jeder Tages- und Nachtzeit und auch zu Arbeitszeitsperrzeiten ermöglicht.

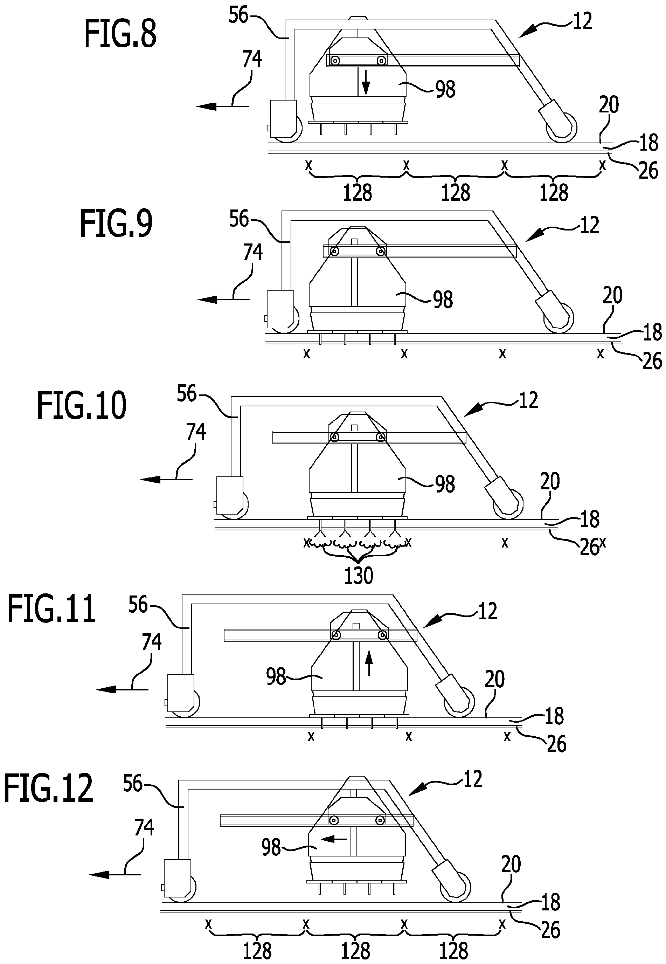

Die Figuren 8 bis 12 zeigen schematisch die Funktionsweise der Vorrichtung 12 während des Verfahrens zur Ausführung der Druckluftinjektion und unter Verschieben der Halteeinrichtung 98 relativ zum Tragrahmen 58. Die Vorrichtung 12 wird mit vorzugsweise konstanter Geschwindigkeit längs der Bearbeitungsrichtung 74 bewegt, und Druckluft wird in aufeinanderfolgenden Bearbeitungszyklen in den Boden 18 injiziert. Sukzessive werden aufeinanderfolgende Behandlungsbereiche 128 mit Druckluft beaufschlagt.

Nicht-einschränkend wird angenommen, dass die Halteeinrichtung 98 zu Beginn des Bearbeitungszyklus angehoben und in Richtung der Vorderseite des Tragrahmens 58 verschoben ist (Figur 8). Die Steuereinrichtung 64 bewirkt zunächst das Absenken der Halteeinrichtung 98 unter Einführen der Nadeln 96 in den Boden 18 in korrekter Soll-Lage zu den Leitungen 26. Wie erwähnt, kann bei Bedarf ferner das Halteteil 100 zum Tragteil 102 verschoben werden.

Die Nadeln 96 verbleiben ortsfest an dieser Position, unter Relativbewegung zum Tragrahmen 58, der sich gewissermaßen an der Halteeinrichtung 98 "vorbeibewegt".

Während die Nadeln 96 ortsfest am Behandlungsbereich 128 verbleiben, wird der Boden 18 mit Druckluft beaufschlagt (Figuren 9 und 10). Wirksamkeitsbereiche 130 der jeweiligen Injektion grenzen aneinander oder überlappen einander, so dass der Boden 18 im Wesentlichen über den gesamten Behandlungsbereich 128 mit Druckluft beaufschlagt wird. Die Grenzen des Behandlungsbereiches 128 sind in der Zeichnung mit zwei "X" gekennzeichnet.

Im weiteren Verlauf des Bearbeitungszyklus werden die Nadeln 96 weiter relativ zum Tragrahmen 58 verschoben, weil dieser sich kontinuierlich in der Bearbeitungsrichtung 74 bewegt (Figur 11).

Anschließend werden die Nadeln 96 angehoben (Figur 12). Die Halteeinrichtung 98 wird daraufhin mit einer Geschwindigkeit relativ zum Tragrahmen 58 in der Bearbeitungsrichtung 74 vorgeschoben, die größer ist als die Vorschubgeschwindigkeit der Vorrichtung 12. Die Halteeinrichtung 98 holt den Tragrahmen 58 gewissermaßen wieder ein, so dass die Nadeln 96 wieder bis an die Vorderseite des Tragrahmens 58 verschoben werden.

Anschließend kann ein Behandlungsbereich mit Druckluft beaufschlagt werden, der dem zuerst bearbeiteten Behandlungsbereich 128 in der Bearbeitungsrichtung 74 nachgelagert ist, um eine flächendeckende Behandlung des Bodens 18 zu ermöglichen.

Die Figuren 1 und 5 zeigen ferner schematisch eine Station 132, die Bestandteil des Systems 10 ist. Die Station 132 kann von der Vorrichtung 12 zum Auffüllen, Nachladen und/oder Austauschen einer Betriebskomponente und/oder eines Betriebsstoffes aufgesucht werden.

Die Station 132 umfasst eine Steuereinrichtung 134 und eine Kommunikationseinrichtung 136, die mit einer korrespondierenden Kommunikationseinrichtung 138 der Vorrichtung 12 kommunizieren kann. Beispielsweise kann die Vorrichtung 12 an die Station 132 eine Mitteilung übersenden, dass sie zur Wartung zur Station 132 zurückkehrt. Die Station 132 kann dadurch in einen Wartungsbereitschaftszustand überführt werden.

Ferner weist die Station 132 eine Lade- oder Befüllvorrichtung 140 auf. Mit der Lade- oder Befüllvorrichtung 140 kann ein Energiespeicher 142 der Vorrichtung 12 nachgeladen oder ausgefüllt werden. Handelt es sich bei dem Energiespeicher 142 um eine Batterie, kann die Lade- oder Befüllvorrichtung 140 zum Aufladen der Batterie eingesetzt werden. Handelt es sich bei dem Energiespeicher 142 um einen Vorratsbehälter für einen Verbrauchsstoff, zum Beispiel einen fossilen Brennstoff, kann die Lade- oder Befüllvorrichtung 140 den Vorratsbehälter bei Bedarf mit neuem Brennstoff befüllen.

Die Station 132 kann ferner eine Fluidnachfüllvorrichtung 144 umfassen, mit der beispielsweise der Fluidbehälter 126 der Fluidbereitstellungseinrichtung 124 erneut mit Fluid befüllt werden kann, wenn die Vorrichtung 12 zur Wartung an die Station 132 zurückgekehrt ist.

Die Vorrichtung 12 kann in der Zeichnung nicht dargestellte Wächter oder Sensoren aufweisen, um die Menge und/oder den Verbrauch an einer Betriebskomponente zu erfassen. Abhängig hiervon kann die Steuereinrichtung 64 entscheiden, ob und wann die Vorrichtung 12 selbsttätig zur Wartung an die Station 132 zurückkehrt.

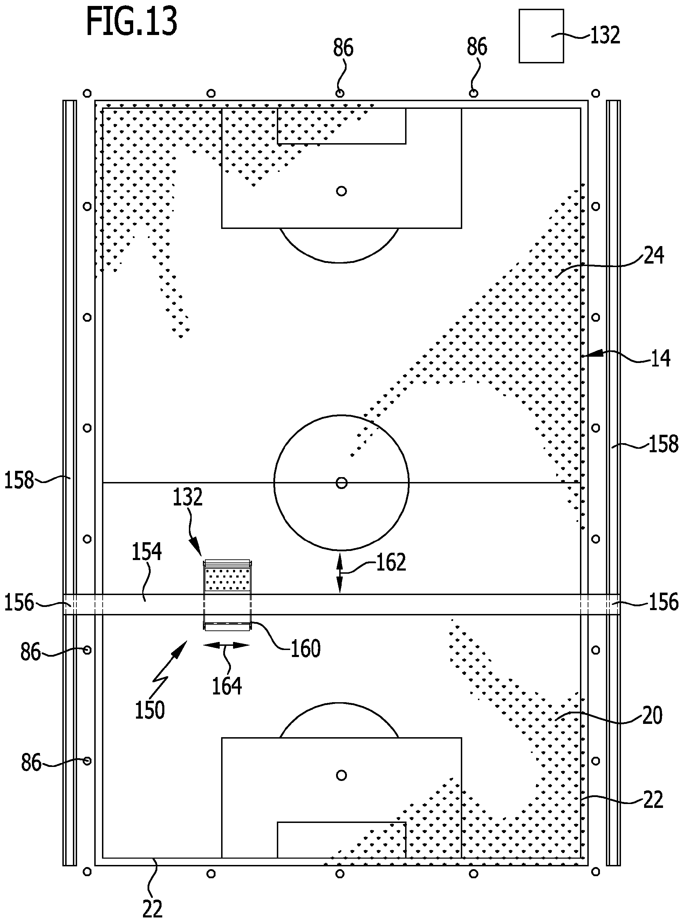

Figur 13 zeigt in einer der Figur 1 entsprechenden Weise eine weitere bevorzugte Ausführungsform eines erfindungsgemäßen Bodenbehandlungssystems 150 mit einer vorteilhaften Ausführungsform einer erfindungsgemäßen Bodenbehandlungsvorrichtung 152, nachfolgend als System 150 bzw. Vorrichtung 152 bezeichnet.

Bei dem System 150 ist die Vorrichtung 152 selbstfahrend ausgestaltet, es ist jedoch nicht vorgesehen, dass die Vorrichtung 12 selbstlenkend ist.

Die Vorrichtung 152 umfasst eine Trageinrichtung mit einem Träger 154. Der Träger 154 kann sich beispielsweise über das Fußballfeld 16 erstrecken und ist an gegenüberliegenden Seiten mit in Höhenrichtung verlaufenden Trägern 156 verbunden. Eine Fahreinrichtung ist untenseitig an den Trägern 156 angeordnet und weist beispielsweise Rollen oder Kufen auf, die in eine jeweilige korrespondierende Führung 158 eingreifen können. Die Führungen 158 können sich beispielsweise parallel zum Fußballfeld 16 erstrecken und erlauben es der Vorrichtung 152, über dessen gesamte Länge zu verfahren. Der Fahrantrieb selbst ist in der Zeichnung nicht dargestellt, er ist jedoch ebenso wie bei der Vorrichtung 12 von der Steuereinrichtung 64 ansteuerbar.

Weiter umfasst die Vorrichtung 152 eine Tragrahmen 160 der Trageinrichtung, der am Träger 154 seitenverschieblich gehalten ist. Ein diesbezüglicher Antrieb, in der Zeichnung nicht dargestellt, ist von der Steuereinrichtung 64 ansteuerbar.

Vorstehende Ausgestaltung erlaubt es, die Vorrichtung 152 in Längsrichtung des Spielfeldes entsprechend dem Pfeil 162 und in Querrichtung des Spielfeldes entsprechend dem Pfeil 164 zu verfahren.

Dabei ist die Vorrichtung so ausgestaltet, dass der Boden 18 über die gesamte Größe des Fußballfeldes 16 so behandelt und insbesondere aerifiziert werden kann, wie dies vorstehend am Beispiel des Systems 10 beschrieben wurde.

Das System 150 ist im Übrigen ebenso ausgestaltet wie das System 10, so dass zur Vermeidung von Wiederholungen auf die voranstehenden Ausführungen verwiesen werden kann. Insbesondere ist auch bei dem System 150 die Möglichkeit gegeben, die relative Lage der Vorrichtung 152 zu den Leitungen 26 zu ermitteln, die Vorrichtung 152 zu verfahren und die Nadeln 96 in den Boden 18 in gewünschter Soll-Lage einzuführen, um eine flächendeckende Behandlung des Bodens 18 durchzuführen.

### Bezugszeichen

- 10: Bodenbehandlungssystem
- 12: Bodenbehandlungsvorrichtung
- 14: Sportanlage
- 16: Fußballfeld
- 18: Boden
- 20: Bodenflächen
- 22: Markierung
- 24: Rasenbewuchs
- 26: Leitungen
- 28: Rasenklimatisierungseinrichtung
- 30: Leitung
- 32: Rohrleitung
- 34: Außenwand
- 36: Innenwand
- 38: Lumen
- 40: 1. Kunststoffschicht
- 42: 2. Kunststoffschicht
- 44: Metallschicht
- 46: Codiereinrichtung
- 44: Codierelemente
- 50: Leitung
- 52: Rohrleitung
- 54: Partikel
- 56: Trageinrichtung
- 58: Tragrahmen
- 60: Fahreinrichtung
- 62: Räder
- 64: Steuereinrichtung
- 66: Linie
- 68: Speichereinrichtung
- 70: Vorderseite
- 72: Rückseite
- 74: Bearbeitungsrichtung
- 76: Sensoreinrichtung
- 78: Detektionseinrichtung
- 80: Magnetsensor
- 82: Funksensor
- 84: Sensorbereich
- 86: Funk-Landmarken
- 88: optischer Sensor
- 90: Positionssensor
- 92: Bodenbehandlungselemente
- 94: Injektionselemente
- 96: Nadeln
- 98: Halteeinrichtung
- 100: Halteteil
- 102: Tragteil
- 104: Verstelleinrichtung
- 106: Verschiebeeinrichtung
- 108: Hubeinrichtung
- 110: Verschiebeeinrichtung
- 112: Pfeil
- 114: Pfeil
- 116: Pfeil
- 118: Pfeil
- 120: Verschiebeeinrichtung
- 122: Verschiebeeinrichtung
- 124: Fluidbereitstellungseinrichtung
- 126: Fluidbehälter
- 128: Behandlungsbereich
- 130: Wirksamkeitsbereich
- 132: Station
- 134: Steuereinrichtung
- 136: Kommunikationseinrichtung
- 138: Kommunikationseinrichtung
- 140: Lade- oder Befüllvorrichtung
- 142: Energiespeicher
- 144: Fluidnachfülleinrichtung
- 150: Bodenbehandlungssystem
- 152: Bodenbehandlungsvorrichtung
- 154: Träger
- 156: Träger
- 158: Führung
- 160: Tragrahmen
- 162: Pfeil
- 164: Pfeil

## Patentansprüche

1. Bodenbehandlungsvorrichtung für Böden (18) mit Rasenbewuchs (24), insbesondere Böden (18) von Sport- oder Freizeitanlagen (14), in denen Leitungen (26) und speziell Rohrleitungen (30, 50) einer Rasenklimatisierungseinrichtung (28) verlegt sind, wobei die Bodenbehandlungsvorrichtung (12; 152) eine Fahreinrichtung (60) umfasst und eine Mehrzahl von an einer Trageinrichtung (56) über eine Hubeinrichtung (108) beweglich gehaltenen, in den Boden (18) einführbaren und aus diesem herausziehbaren Bodenbehandlungselementen (92) umfasst, **dadurch gekennzeichnet, dass** die Bodenbehandlungsvorrichtung (12; 152) eine Detektionseinrichtung (78) umfasst zum Ermitteln der Lage der Leitungen (26) im Boden (18) relativ zur Bodenbehandlungsvorrichtung (12; 152) in zumindest einer Raumrichtung, dass die Bodenbehandlungsvorrichtung (12; 152) selbstfahrend ausgestaltet ist, wobei die Bodenbehandlungsvorrichtung (12; 152) relativ zu den Leitungen (26) verfahrbar ist und die Bodenbehandlungselemente (92) abhängig von der Lage der Leitungen (26) in den Boden (18) einführbar sind.

2. Bodenbehandlungsvorrichtung nach Anspruch 1, **dadurch gekennzeichnet, dass** die Bodenbehandlungsvorrichtung (12) selbstlenkend ausgestaltet ist.

3. Bodenbehandlungsvorrichtung nach Anspruch 1 oder 2, **dadurch gekennzeichnet, dass** die Fahreinrichtung (60) an der Trageinrichtung (56) gehaltene Räder (62), Rollen, Walzen und/oder Raupenketten zum Verfahren auf der Bodenfläche (20) und/oder zum Verfahren an einer der Bodenbehandlungsvorrichtung (12) zuordenbaren Führungseinrichtung (158) aufweist.

4. Bodenbehandlungsvorrichtung nach einem der voranstehenden Ansprüche, **dadurch gekennzeichnet, dass** die Bodenbehandlungsvorrichtung (12) gemäß einem vorgegebenen Bewegungsmuster relativ zum Boden (18) verfahrbar ist, vorzugsweise dass eine flächendeckende oder im Wesentlichen flächendeckende Bearbeitung der Bodenfläche (20) durchführbar ist.

5. Bodenbehandlungsvorrichtung nach einem der voranstehenden Ansprüche, **dadurch gekennzeichnet, dass** die Bodenbehandlungselemente (92) Injektionselemente (94) sind, über die in deren in den Boden (18) eingeführten Zustand Fluid in den Boden (18) injizierbar ist, und dass die Bodenbehandlungsvorrichtung (12; 152) eine Fluidbereitstellungseinrichtung (124) aufweist, die mit den Injektionselementen (94) fluidwirksam verbunden ist, vorzugsweise dass die Fluidbereitstellungseinrichtung (124) von einer Steuereinrichtung (64) der Bodenbehandlungsvorrichtung (12) zum Einstellen der Menge, des Druckes und/oder der Dauer der Beaufschlagung der Injektionselemente (94) mit Fluid ansteuerbar ist.

6. Bodenbehandlungsvorrichtung nach einem der voranstehenden Ansprüche, **dadurch gekennzeichnet, dass** mit der Detektionseinrichtung (78) zumindest eines der Folgenden ermittelbar ist:
- eine Verlegetiefe der Leitungen (26) im Boden (18);
- eine Verlaufsrichtung der Leitungen (26) im Boden (18);
- eine Relativposition der Leitungen (26) zur Bodenbehandlungsvorrichtung (12; 152).

7. Bodenbehandlungsvorrichtung nach einem der voranstehenden Ansprüche, **dadurch gekennzeichnet, dass** die Hubeinrichtung (108) von einer Steuereinrichtung (64) der Bodenbehandlungsvorrichtung (12; 152) ansteuerbar ist und dass die Bodenbehandlungselemente (92) abhängig von der Lage der Leitungen (26) folgendermaßen in den Boden (18) einführbar sind:
- zwischen nebeneinanderliegenden Leitungen (26); und/oder
- mit einer Einführtiefe, die maximal so groß ist wie die Verlegetiefe der Leitungen (26) oder
- mit einer Einführtiefe, die mindestens so groß ist und vorzugsweise größer als die Verlegetiefe der Leitungen (26).

8. Bodenbehandlungsvorrichtung nach einem der voranstehenden Ansprüche, **dadurch gekennzeichnet, dass** die Bodenbehandlungsvorrichtung (12; 152) eine Speichereinrichtung (68) aufweist, in der eine Karte des zu behandelnden Bodens (18) gespeichert oder speicherbar ist.

9. Bodenbehandlungsvorrichtung nach Anspruch 8, **dadurch gekennzeichnet, dass** in der Karte die Lage der Leitungen (26) nach zumindest einem der Folgenden vorzugsweise veränderbar hinterlegt ist:
- die Lage der Leitungen (26) mit Positionsinformation in einem relativen Bezugssystem, das von mindestens einer in der Karte hinterlegten Landmarke (86) in vorgegebener räumlicher Beziehung zu den Leitungen (26) definiert ist, wobei mittels der Detektionseinrichtung (78) die relative Lage der Bodenbehandlungsvorrichtung (12; 152) und der mindestens einen Landmarke (86) erfassbar ist zum Ermitteln der Lage der Leitungen (26) relativ zur Bodenbehandlungsvorrichtung (12; 152);
- die Lage der Leitungen (26) mit Positionsinformation in einem absoluten Bezugssystem, wobei mittels der Detektionseinrichtung (78) die Position der Bodenbehandlungsvorrichtung (12; 152) im absoluten Positionssystem ermittelbar ist.

10. Bodenbehandlungsvorrichtung nach Anspruch 8 oder 9, **dadurch gekennzeichnet, dass** in der Karte die Lage mindestens einer Landmarke (86) in vorgegebener räumlicher Beziehung zum Boden (18) hinterlegt ist, wobei mittels der Detektionseinrichtung (78) die relative Lage der Bodenbehandlungsvorrichtung (12; 152) und der mindestens einen Landmarke (86) erfassbar ist, und dass beim Verfahren der Bodenbehandlungsvorrichtung (12; 152) relativ zum Boden (18) mittels der Detektionseinrichtung (78) die Lage der Leitungen (26) relativ zur Bodenbehandlungsvorrichtung (12) ermittelbar ist.

11. Bodenbehandlungsvorrichtung nach Anspruch 10, **dadurch gekennzeichnet, dass** zumindest eines der Folgenden durchführbar ist:
- Überprüfung der dabei ermittelten relativen Lage mit der Lage der Leitungen (26), die in der Karte im absoluten oder relativen Bezugssystem hinterlegt ist, und im Falle einer Abweichung Aktualisieren der Lage der Leitungen (26) in der Karte;
- Anpassung der Bewegung der Bodenbehandlungsvorrichtung (12; 152) relativ zum Boden (18), um ein Einführen der Bodenbehandlungselemente (92) an der vorgesehenen Soll-Position sicherzustellen;
- Bewegung der Bodenbehandlungselemente (92) relativ zur Trageinrichtung (56), um ein Einführen der Bodenbehandlungselemente (92) an der vorgesehenen Soll-Position sicherzustellen.

12. Bodenbehandlungsvorrichtung nach einem der Ansprüche 8 bis 11, **dadurch gekennzeichnet, dass** die Karte nach zumindest einem der Nachfolgenden bereitstellbar ist:
- Bereitstellen der Karte in der Speichereinrichtung (68) durch eine Bedienperson;
- Durchführen einer Lernfahrt durch die Bodenbehandlungsvorrichtung (12; 152) oder unter Führung durch eine Bedienperson unter Ermittlung der Lage der Leitungen (26) und/oder mindestens einer Landmarke (86) in einem relativen und/oder einem absoluten Bezugssystem.

13. Bodenbehandlungsvorrichtung nach einem der voranstehenden Ansprüche, **dadurch gekennzeichnet, dass** die Detektionseinrichtung (78) mindestens eine der folgenden Sensoreinrichtungen (76) ist oder aufweist:
- eine Magnetsensoreinrichtung;
- eine elektrische Sensoreinrichtung;
- eine optische Sensoreinrichtung, insbesondere umfassend eine digitale Kamera und/oder eine Laser-Scan-Sensoreinrichtung;
- eine absolute Positionssensoreinrichtung, insbesondere für ein satellitengestütztes Navigationssystem;
- eine Funksensoreinrichtung, insbesondere umfassend einen Bluetooth-Sensor oder einen RFID-Sensor;
- eine Ultraschallsensoreinrichtung;
- eine thermische Sensoreinrichtung.

14. Bodenbehandlungsvorrichtung nach einem der voranstehenden Ansprüche, **dadurch gekennzeichnet, dass** Sensoren (80) oder eine Sensoreinrichtung (76) der Detektionseinrichtung (78) in einer Bearbeitungsrichtung (74) führend an der Bodenbehandlungsvorrichtung (12; 152) angeordnet sind.

15. Bodenbehandlungsvorrichtung nach einem der voranstehenden Ansprüche, **dadurch gekennzeichnet, dass** die Bodenbehandlungselemente (92) an einer ihnen zugeordneten gemeinsamen Halteeinrichtung (98) gehalten sind und dass die Halteeinrichtung (98) zumindest teilweise relativ zur Trageinrichtung (56) in zumindest einer Raumrichtung (112, 114) quer zur Einführ- und Ausziehbewegung abhängig von der ermittelten Lage der Leitungen (26) bewegbar und insbesondere verschiebbar ist, vorzugsweise dass beim Verfahren der Bodenbehandlungsvorrichtung (12; 152) relativ zum Boden (18) eine Bewegung gemäß einem vorgegebenen Bewegungsmuster beibehalten oder im Wesentlichen beibehalten wird und die Halteeinrichtung (98) zumindest teilweise relativ zur Trageinrichtung (56) bewegbar und insbesondere verschiebbar ist.

16. Bodenbehandlungssystem, umfassend eine Bodenbehandlungsvorrichtung nach einem der Ansprüche 1 bis 15 und mindestens eine von der Detektionseinrichtung (78) der Bodenbehandlungsvorrichtung (12; 152) detektierbare Landmarke (86), die in definierte(r) räumliche(r) Position zu den Leitungen (26) bringbar ist oder steht.

17. Bodenbehandlungssystem nach Anspruch 16, **dadurch gekennzeichnet, dass** das Bodenbehandlungssystem (10) eine Station (132) für die Bodenbehandlungsvorrichtung (12; 152) umfasst, die von dieser selbsttätig aufsuchbar ist zum Austauschen und/oder Auffüllen und/oder Nachladen einer Betriebskomponente oder eines Betriebsstoffes, vorzugsweise dass die Bodenbehandlungsvorrichtung (12; 152) mindestens eine wiederaufladbare oder austauschbare Batterie aufweist, die an der Station (132) austauschbar oder aufladbar ist, einen Vorratsbehälter für an der Station auffüllbaren Brennstoff und/oder dass die Station (132) mindestens eine Fluidnachfülleinrichtung (144) zum Auffüllen einer Fluidbereitstellungseinrichtung (124) der Bodenbehandlungsvorrichtung (12) aufweist.

## Claims

1. Ground treatment apparatus for grounds (18) with grass growth (24), in particular grounds (18) of sport and leisure facilities (14) in which conduits (26) and specifically pipe conduits (30, 50) of a ground conditioning device (28) are laid, wherein the ground treatment apparatus (12; 152) comprises a traveling device (60) and comprises a plurality of ground treatment elements (92) that are held on a support device (56) so as to be movable by way of a lifting device (108) and are insertable into the ground (18) and are extractable therefrom, **characterized in that** the ground treatment apparatus (12; 152) comprises a detection device (78) for determining the location of the conduits (26) in the ground (18) relative to the ground treatment apparatus (12; 152) in at least one spatial direction, **in that** the ground treatment apparatus (12; 152) is of self-propelled configuration, wherein the ground treatment apparatus (12; 152) can travel relative to the conduits (26) and the ground treatment elements (92) are insertable into the ground (18) in dependence on the location of the conduits (26) in the ground (18).

2. Ground treatment apparatus in accordance with Claim 1, **characterized in that** the ground treatment apparatus (12) is of self-steering configuration.

3. Ground treatment apparatus in accordance with Claim 1 or 2, **characterized in that** the traveling device (60) has wheels (62), rolls, rollers, and/or caterpillar tracks held on the support device (56) for traveling on the ground surface (20) and/or for traveling on a guiding device (158) that can be associated with the ground treatment apparatus (12).

4. Ground treatment apparatus in accordance with any one of the preceding Claims, **characterized in that** the ground treatment apparatus (12) can travel relative to the ground (18) according to a predetermined movement pattern, preferably **in that** a full-coverage or substantially full-coverage processing of the ground surface (20) is performable.

5. Ground treatment apparatus in accordance with any one of the preceding Claims, **characterized in that** the ground treatment elements (92) are injection elements (94), by way of which, in their state in which they are inserted into the ground (18), fluid is injectable into the ground (18), and **in that** the ground treatment apparatus (12; 152) has a fluid provisioning device (124), which is fluidically connected to the injection elements (94), preferably **in that** the fluid provisioning device (124) is controllable by a control device (64) of the ground treatment apparatus (12) to set the amount, the pressure, and/or the duration of the action of the injection elements (94) with fluid.

6. Ground treatment apparatus in accordance with any one of the preceding Claims, **characterized in that** at least one of the following is determinable with the detection device (78):
- a laying depth of the conduits (26) in the ground (18);
- a running direction of the conduits (26) in the ground (18);
- a relative position of the conduits (26) to the ground treatment apparatus (12; 152).

7. Ground treatment apparatus in accordance with any one of the preceding Claims, **characterized in that** the lifting device (108) is controllable by a control device (64) of the ground treatment apparatus (12; 152) and **in that** the ground treatment elements (92) are insertable into the ground (18) as follows in dependence on the location of the conduits (26):
- between adjacent conduits (26); and/or
- to an insertion depth that is maximally as great as the laying depth of the conduits (26) or
- to an insertion depth that is at least as great as and preferably greater than the laying depth of the conduits (26).

8. Ground treatment apparatus in accordance with any one of the preceding Claims, **characterized in that** the ground treatment apparatus (12; 152) has a storage device (68) in which a map of the ground (18) to be treated is stored or storable.

9. Ground treatment apparatus in accordance with Claim 8, **characterized in that** the location of the conduits (26) according to at least one of the following is preferably variably stored in the map:
- the location of the conduits (26) with position information in a relative reference system that is defined by at least one landmark (86) stored in the map in a predetermined spatial relationship to the conduits (26), wherein the relative location of the ground treatment apparatus (12; 152) and the at least one landmark (86) is detectable by means of the detection device (78) for determining the location of the conduits (26) relative to the ground treatment apparatus (12; 152);
- the location of the conduits (26) with position information in an absolute reference system, wherein the position of the ground treatment apparatus (12; 152) in the absolute position system is determinable by means of the detection device (78).

10. Ground treatment apparatus in accordance with Claim 8 or 9, **characterized in that** the location of at least one landmark (86) in a predetermined spatial relationship to the ground (18) is stored in the map, wherein the relative location of the ground treatment apparatus (12; 152) and the at least one landmark (86) is detectable by means of the detection device (78), and **in that** the location of the conduits (26) relative to the ground treatment apparatus (12) is determinable by means of the detection device (78) during travel of the ground treatment apparatus (12; 152) relative to the ground (18).

11. Ground treatment apparatus in accordance with Claim 10, **characterized in that** at least one of the following is performable:
- checking the determined relative location with the location of the conduits (26) that is stored in the map in the absolute or relative reference system, and in the case of a deviation updating the location of the conduits (26) in the map;
- adapting the movement of the ground treatment apparatus (12; 152) relative to the ground (18) in order to ensure an insertion of the ground treatment elements (92) at the predetermined desired position;
- moving the ground treatment elements (92) relative to the support device (56) in order to ensure an insertion of the ground treatment elements (92) at the predetermined desired position.

12. Ground treatment apparatus in accordance with any one of Claims 8 to 11, **characterized in that** the map is providable according to at least one of the following:
- provision of the map in the storage device (68) by an operator;
- performance of a teach-in journey by the ground treatment apparatus (12; 152) or guided by an operator while determining the location of the conduits (26) and/or at least one landmark (86) in a relative and/or an absolute reference system.

13. Ground treatment apparatus in accordance with any one of the preceding Claims, **characterized in that** the detection device (78) is or has at least one of the following sensor devices (76):
- a magnet sensor device;
- an electrical sensor device;
- an optical sensor device, in particular comprising a digital camera and/or a laser scan sensor device;
- an absolute position sensor device, in particular for a satellite-supported navigation system;
- a radio sensor device, in particular comprising a Bluetooth sensor or an RFID sensor;
- an ultrasonic sensor device;
- a thermal sensor device.

14. Ground treatment apparatus in accordance with any one of the preceding Claims, **characterized in that** sensors (80) or a sensor device (76) of the detection device (78) are arranged on the ground treatment apparatus (12; 152) leading in a processing direction (74).

15. Ground treatment apparatus in accordance with any one of the preceding Claims, **characterized in that** the ground treatment elements (92) are held on a common holding device (98) associated therewith and **in that** the holding device is movable and, in particular, displaceable at least partially relative to the support device (56) in at least one spatial direction (112, 114) transversely to the insertion and extraction movement in dependence on the determined location of the conduits (26), preferably in that during travel of the ground treatment apparatus (12; 152) relative to the ground (18), a movement according to a predetermined movement pattern is maintained or substantially maintained and the holding device (98) is movable and, in particular, displaceable at least partially relative to the support device (56).

16. Ground treatment system, comprising a ground treatment apparatus in accordance with any one of Claims 1 to 15 and at least one landmark (86) that is detectable by the detection device (78) of the ground treatment apparatus (12; 152) and is bringable into or is in a defined spatial position relative to the conduits (26).

17. Ground treatment system in accordance with Claim 16, **characterized in that** the ground treatment system (10) comprises a station (132) for the ground treatment apparatus (12; 152), which is automatically visitable by said ground treatment apparatus (12; 152) for exchanging and/or filling and/or recharging an operating component or an operating fuel, preferably **in that** the ground treatment apparatus (12; 152) has at least one rechargeable or exchangeable battery that is exchangeable or chargeable at the station (132), a reservoir for fuel that is fillable at the station, and/or **in that** the station (132) has at least one fluid filling device (144) for filling up a fluid provisioning device (124) of the ground treatment apparatus (12).

## Revendications

1. Dispositif de traitement du sol pour sols (18) ayant une couverture de pelouse (24), en particulier sols (18) d'installations sportives ou de loisirs (14), dans lesquels des conduites (26) et en particulier des canalisations (30, 50) d'un dispositif de climatisation de pelouse (28) sont posées, où le dispositif de traitement du sol (12; 152) comprend un dispositif de déplacement (60) et comprend une pluralité d'éléments de traitement du sol (92) maintenus mobiles sur un dispositif de support (56) par l'intermédiaire d'un dispositif de levage (108), pouvant être insérés dans le sol (18) et en être retirés, **caractérisé en ce que** le dispositif de traitement du sol (12; 152) comprend un dispositif de détection (78) pour déterminer la position des conduites (26) dans le sol (18) par rapport au dispositif de traitement du sol (12; 152) dans au moins une direction spatiale, **en ce que** le dispositif de traitement du sol (12; 152) est conçu pour être automoteur, où le dispositif de traitement du sol (12; 152) est déplaçable par rapport aux conduites (26) et les éléments de traitement du sol (92) peuvent être insérés dans le sol (18) en fonction de la position des conduites (26).

2. Dispositif de traitement du sol selon la revendication 1, **caractérisé en ce que** le dispositif de traitement du sol (12) est conçu pour être autoguidé.

3. Dispositif de traitement du sol selon la revendication 1 ou 2, **caractérisé en ce que** le dispositif de déplacement (60) comporte des roues (62), des galets, des rouleaux et/ou des chaînes à chenilles maintenues sur le dispositif de support (56) pour le déplacement sur la surface du sol (20) et/ou pour le déplacement sur un dispositif de guidage (158) pouvant être associé au dispositif de traitement du sol (12).

4. Dispositif de traitement du sol selon l'une des revendications précédentes, **caractérisé en ce que** le dispositif de traitement du sol (12) est déplaçable par rapport au sol (18) selon un modèle de mouvement prédéterminé, de préférence **en ce qu'**un traitement de la surface du sol (20) couvrant la surface ou couvrant sensiblement la surface peut être réalisé.

5. Dispositif de traitement du sol selon l'une des revendications précédentes, **caractérisé en ce que** les éléments de traitement du sol (92) sont des éléments d'injection (94), par l'intermédiaire desquels un fluide peut être injecté dans le sol (18) dans leur état introduit dans le sol (18), et **en ce que** le dispositif de traitement du sol (12; 152) comporte un dispositif de mise à disposition de fluide (124) qui est relié fluidiquement aux éléments d'injection (94), de préférence **en ce que** le dispositif de mise à disposition de fluide (124) peut être commandé par un dispositif de commande (64) du dispositif de traitement du sol (12) pour régler la quantité, la pression et/ou la durée d'application de fluide aux éléments d'injection (94).

6. Dispositif de traitement du sol selon l'une des revendications précédentes, **caractérisé en ce qu'**au moins l'une des suivantes peut être déterminée avec le dispositif de détection (78):
- une profondeur d'installation des conduites (26) dans le sol (18);
- une direction d'implantation des conduites (26) dans le sol (18);
- une position relative des conduites (26) par rapport au dispositif de traitement du sol (12; 152).

7. Dispositif de traitement du sol selon l'une des revendications précédentes, **caractérisé en ce que** le dispositif de levage (108) peut être commandé par un dispositif de commande (64) du dispositif de traitement du sol (12; 152) et **en ce que**, selon la position des conduites (26), les éléments de traitement du sol (92) peuvent être introduits dans le sol (18) de la manière suivante:
- entre des conduites (26) juxtaposées; et/ou
- avec une profondeur d'insertion qui est au plus égale à la profondeur d'installation des conduites (26) ou
- avec une profondeur d'insertion qui est au moins aussi grande et de préférence supérieure à la profondeur d'installation des conduites (26).

8. Dispositif de traitement du sol selon l'une des revendications précédentes, **caractérisé en ce que** le dispositif de traitement du sol (12; 152) comporte un dispositif à mémoire (68) dans lequel une carte du sol (18) à traiter est stockée ou peut être stockée.

9. Dispositif de traitement du sol selon la revendication 8, **caractérisé en ce que** la position des conduites (26) est mémorisée dans la carte de préférence de manière modifiable selon au moins l'une des suivantes:
- la position des conduites (26) avec des informations de position dans un système de référence relatif qui est défini par au moins un point de repère (86) mémorisé dans la carte dans une relation spatiale prédéterminée avec les conduites (26), où la position relative du dispositif de traitement du sol (12; 152) et du au moins un point de repère (86) peut être acquise au moyen du dispositif de détection (78) pour déterminer la position des conduites (26) par rapport au dispositif de traitement du sol (12; 152);
- la position des conduites (26) avec des informations de position dans un système de référence absolu, où la position du dispositif de traitement du sol (12; 152) dans le système de position absolu peut être déterminée au moyen du dispositif de détection (78).

10. Dispositif de traitement du sol selon la revendication 8 ou 9, **caractérisé en ce que** la position d'au moins un point de repère (86) dans une relation spatiale prédéterminée avec le sol (18) est mémorisée dans la carte, où la position relative du dispositif de traitement du sol (12; 152) et du au moins un point de repère (86) peut être acquise au moyen du dispositif de détection (78), et **en ce que** lors du déplacement du dispositif de traitement du sol (12; 152) par rapport au sol (18), la position des conduites (26) par rapport au dispositif de traitement du sol (12) peut être déterminée au moyen du dispositif de détection (78).

11. Dispositif de traitement du sol selon la revendication 10, **caractérisé en ce qu'**au moins l'un des suivants peut être réalisé:
- vérification de la position relative ainsi déterminée avec la position des conduites (26) qui est mémorisée dans la carte dans le système de référence absolu ou relatif, et en cas d'écart, actualisation de la position des conduites (26) dans la carte;
- adaptation du mouvement du dispositif de traitement du sol (12; 152) par rapport au sol (18) pour garantir une introduction des éléments de traitement du sol (92) à la position cible prévue;
- mouvement des éléments de traitement du sol (92) par rapport au dispositif de support (56), pour garantir une introduction des éléments de traitement du sol (92) à la position cible prévue.

12. Dispositif de traitement du sol selon l'une des revendications 8 à 11, **caractérisé en ce que** la carte peut être mise à disposition selon au moins l'une des suivantes:
- mise à disposition de la carte dans le dispositif de stockage (68) par un opérateur;
- réalisation d'un parcours d'apprentissage par le dispositif de traitement du sol (12; 152) ou sous la conduite d'un opérateur avec détermination de la position des conduites (26) et/ou d'au moins un point de repère (86) dans un système de référence relatif et/ou absolu.

13. Dispositif de traitement du sol selon l'une des revendications précédentes, **caractérisé en ce que** le dispositif de détection (78) est ou comporte au moins l'un des dispositifs capteurs (76) suivants:
- un dispositif capteur magnétique;
- un dispositif capteur électrique;
- un dispositif capteur optique, comprenant en particulier un appareil photo numérique et/ou un dispositif capteur à balayage laser;
- un dispositif capteur de position absolu, en particulier pour un système de navigation par satellite;
- un dispositif capteur radio, comprenant en particulier un capteur Bluetooth ou un capteur RFID;
- un dispositif capteur à ultrasons;
- un dispositif capteur thermique.

14. Dispositif de traitement du sol selon l'une des revendications précédentes, **caractérisé en ce que** des capteurs (80) ou un dispositif capteur (76) du dispositif de détection (78) sont disposés dans une direction de traitement (74) conduisant au dispositif de traitement du sol (12; 152).

15. Dispositif de traitement du sol selon l'une des revendications précédentes, **caractérisé en ce que** les éléments de traitement du sol (92) sont maintenus sur un dispositif de maintien (98) commun qui leur est associé et **en ce que** le dispositif de maintien (98) est mobile et en particulier peut être décalé au moins partiellement par rapport au dispositif de support (56) dans au moins une direction spatiale (112, 114) transversalement au mouvement d'introduction et de retrait en fonction de la position des conduites (26) déterminée, de préférence **en ce que** lors du déplacement du dispositif de traitement du sol (12; 152) par rapport au sol (18), un mouvement selon un modèle de mouvement prédéterminé est conservé ou sensiblement conservé et le dispositif de maintien (98) est mobile et en particulier peut être décalé au moins partiellement par rapport au dispositif de support (56).

16. Système de traitement du sol, comprenant un dispositif de traitement du sol selon l'une des revendications 1 à 15 et au moins un point de repère (86) détectable par le dispositif de détection (78) du dispositif de traitement du sol (12; 152), qui peut être amené ou est situé dans une position spatiale définie par rapport aux conduites (26).

17. Système de traitement du sol selon la revendication 16, **caractérisé en ce que** le système de traitement du sol (10) comprend une station (132) pour le dispositif de traitement du sol (12; 152), qui peut être approchée automatiquement par celui-ci pour l'échange et/ou le remplissage et/ou la recharge d'un composant de fonctionnement ou d'une substance de fonctionnement, de préférence **en ce que** le dispositif de traitement du sol (12; 152) comporte au moins une batterie rechargeable ou remplaçable qui est remplaçable ou rechargeable à la station (132), un récipient de réserve pour du carburant pour remplissage à la station et/ou **en ce que** la station (132) comporte au moins un dispositif d'ajout de fluide (144) pour remplir un dispositif de mise à disposition de fluide (124) du dispositif de traitement du sol (12).
